# EUROPEAN PATENT SPECIFICATION

(11) **EP 0 761 947 B1**
(45) Date of publication and mention of the grant of the patent: **24.05.2000**
(21) Application number: 96650036.5
(22) Date of filing: 27.08.1996
(51) Int. Cl.: F02C 7/24, F02C 7/045, F02K 1/38, F02K 1/48, F02K 1/60, F02K 3/06, B64C 1/40

(54) **Noise reduction kit for turbofan engine**
Satz für Bläsertriebwerkslärmdampfung
Ensemble amortisseur de bruit pour turbosoufflante

(30) Priority: 29.08.1995 US 521139; 11.01.1996 US 584342
(43) Date of publication of application: 12.03.1997
(73) Proprietor: Burbank Aeronautical Corporation II, Burbank, California 91505 (US); McGuire, Kenneth R., Encino, California 91316 (US)
(72) Inventor: McGuire, Kenneth R., Encino, California 91316 (US); Phillips, Edward J., San Diego, California 92127 (US); Lillibridge, Robert W., Woodland Hills, California 91367 (US); Matthews, Eugene James, Encino, California 91316 (US)
(74) Representative: Hanna, Peter William Derek

(56) References cited:
- GB-A- 2 247 712
- US-A- 3 696 617
- US-A- 4 292 803
- US-A- 4 817 756
- US-A- 5 042 245
- US-A- 5 127 602
- US-A- 5 169 288
- US-A- 5 372 006
- J. OF THE ACOUSTICAL SOC. OF AMERICA, vol. 58, no. 1, July 1975, USA, pages 155-172, XP002020367 C.L.ARCTANDER ,C.G. HODGE,R.B. TATE: "Development of noise reduction concepts for 727 and 737 airplanes."
- J.OF THE ACOUSTICAL SOC. OF AMERICA., vol. 58, no. 1, July 1975, US, pages 144-154, XP002020368 M.N.NELSEN: "Development of noise reduction concepts for the 707 airplane."

## Description

### BACKGROUND

Having a turbofan engine with reduced noise is important.

This invention relates to a turbofan engine for aircraft, the engine having reduced noise. In particular, the invention is concerned with a family of engines originally manufactured by Pratt & Whitney. In particular, these engines include the JT3D-3B, the JT3D-7 and the TF33 Engine, which includes the P-3/103, the P-5, the P-9, the P-100/100A and the P-102/102A Engines ("the JT3D family"). Such engines are commonly used on Boeing 707 aircraft, the Boeing KC135 and E3A aircraft, the Douglas DC8 aircraft and Lockheed C141 aircraft ("Aircraft").

Different techniques and systems are available to quiet an engine to reach different stages of noise reduction as defined by different governmental authorities. In particular, there are hush kits available to quiet Pratt & Whitney JT8D engines commonly used on Boeing 727 aircraft. Such an engine quieting system is the subject of U.S. Patent No. 5,127,602 ("Batey"). The system uses a spacer and mixer to mix exhaust gas with fan air gas at the rear of the nozzle of the core engine. A cascade-type thrust reverser is used for thrust reverse conditions. Unlike the JT8D family, the JT3D family of engines are designed to exhaust fan air and turbine air separately to ambient air.

In other systems and with other engines, an annular pressure duct is used to direct fan air rearwardly to the rear zone of the exhaust nozzle. Such a system is applied on DC8 Sixty Series aircraft. In these cases, there is no internal mixing in the nozzle area of the exhaust air and duct air at the rear of the core engine. There is no common nozzle.

In some cases, such as the Douglas DC8-62/63 series aircraft and the Lockheed C141 aircraft, the fan air is directed to a plane just upstream of the turbine exhaust nozzle where it ducts to ambient air. In these cases, a common thrust reverser reverses both fan and turbine air. In other cases, such as the Boeing 707, Boeing KC135 and E3A aircraft and Douglas DC8-50/61 series aircraft, the fan air is directed only a short distance and exits to ambient air substantially forward of the turbine exhaust nozzle. In these cases where thrust reversing is desired, separate fan and turbine thrust reversers are required.

Furthermore, these engines have a bleed valve which, in certain situations of low power engine operation, particularly on approach to landing, is opened to bleed air from the core engine away from the thrust generating exit rearwardly of the core engine, perpendicular to the thrust axis of the engine. The opening of the bleed valve relieves very hot supersonic air flow and causes a substantial screeching noise and increases the noise characteristics noticeably in that operative state of the engine.

In the Applicant's experience, there is no system which exists for effectively quieting this JT3D family of engines in a manner to reduce the perceived noise level of the engines, especially low frequency jet mixing noise by at least three (3) noise decibels while maintaining the existing thrust levels.

There is a need to provide for the effective operation of such engines under appropriate thrust and operate under the appropriate noise-reduced conditions.

In particular, it is desirable to provide a turbofan engine with reduced noise and to provide a hush kit for retrofitting such engines which minimizes the disadvantages of known systems.

### SUMMARY

By this invention there is provided a turbojet engine with reduced noise and a hush kit system for retrofitting an engine and creating a quieter engine which has advantages over known hush kit systems.

According to the invention, there is provided a noise-reduced turbofan engine comprising a core engine having two (2) spool axial flow fans, multi-stage compressors and multi-stage reaction turbines and a thrust of at least about 80,064 N (18,000 lbs.) at sea level. These engines include the JT3D-3B, the JT3D-7, and TF33, which includes the P-3/103, the P-5, the P-9, the P-100/100A and the P-102/102A engines produced by Pratt & Whitney, East Hartford, Connecticut, having a thrust preferably between about 80,064 newtons and about 93,408 newtons (about 18,000 lbs and about 21,000 lbs.) at sea level.

The fans are at an upstream end of the core engine for generating axial fan air flow. There are bypass ducts for receiving a major portion of the axial fan air flow from the fans. The ducts terminate at a common nozzle located at the outlet for exhaust gas from the engine.

The common nozzle has a mixing plane area for each of the fan air flow and for the exhaust gas, each in a range between 4516 and 5162 cm² (700 and 800 square inches). There is a mixer in the common nozzle assembly disposed axially to receive and exhaust the exhaust gas and fan air from the common nozzle to the tail pipe assembly. The plane area for the fan air is preferably in the range of about 4839 to 5033 cm² (750 to 780 square inches) and more preferably about 4852 cm² (752 square inches). The plane area for the exhaust gas is preferably in the range of about 4678 cm² to 4904 cm² (725 to 760 square inches) and more preferably about 4691 cm² (727 square inches). The exit area of the mixer, namely the area of the common nozzle, is preferably about 9032 to 9677 cm² (1,400 to 1,500 square inches), and more preferably about 9561 cm² (1,482 square inches). The static pressure of the fan exit and turbo exit is equalized for the engine pressure ratio of 1.7 to 1.86 and more preferably about 1.83 at the static takeoff conditions. The design is such that at lower engine pressure ratios the back pressure on the compressor fans and the turbine is not increased causing a decreased safety margin for engine stall while at the same time not decreased causing a loss in engine thrust.

A mixer has an upstream end and an annular mixer wall axially extending downstream therefrom. The wall is formed into a plurality of circumferentially alternating radially inward and radially outward lobes, the radially inward lobes defining cold chutes for radially inwardly diverting fan air and outward lobes defining hot chutes for permitting radially outward expansion of exhaust.

An annular mixer adapter is provided for fixing the mixer to a casing for the core engine in a position downstream of and coaxial with the core engine. A mixer transition contour plate has an upstream end for coaxial attachment to the downstream end of the core engine. This plate is an annular, axially extending transition contour plate for attachment to the upstream end of the mixer. The plate is shaped to aerodynamically conform to the mixer so as to effectively direct the fan air.

A thrust reverser is provided which is movable into a first position for converting axial flow of exhaust gas and fan air from the tail pipe assembly into reverse thrust. It is movable into a second stowed position for permitting the reverser doors to act as aerodynamic fairing for the nacelle afterbody. The thrust reverser is a target-type system having opposing doors rotatable into the first position to block and divert the flow of exhaust gases from a primary nozzle of the core engine by means of a mechanical linkage to an hydraulic actuation system. An acoustic liner is provided for the nozzle surrounding the mixer.

A material layer is located in a spacing between a tip of blades for at least some of the fans and a duct for the fans, thereby to reduce a normal clearance between the tip of blades for the fan and the duct.

An acoustically dampened nose cone, also known as an inlet centerbody, is provided for coaxial attachment to an upstream end of the core engine. The nose cone is light bulb-shaped. An inlet cowling, more preferably about 102 cm to 122 cm (40" to 48") in length, is provided with a leading edge which is heated by engine bleed air for anti-icing with an acoustic liner comprising the inner air flow walls. In some cases where blow-in doors are presently provided in the inlet to supplement intake air at high thrust levels of the engine, the diameter of the inlet is somewhat enlarged and the blow-in doors eliminated.

The axial flow front fan is axially separated by a spacer, preferably about 8 cm to 13 cm (3" to 5"), an amount equal approximately to the axial depth of the blades of the fans. The inlet guide vanes, which direct inlet air to the first row of fan blades, is moved to a position, preferably in the range of 8 cm to 13 cm (3" to 5") forward of its present location, and a new engine hub and oil-damped bearing installed.

There is an inlet pressure sensing probe housed in an inlet bullet forwardly of the fans. Alternatively, there is an inlet pressure sensing probe housed at a location of an inlet guide vane forwardly of the fans, the probe being shaped for aerodynamic location in the inlet guide vane. The axial flow front fan is axially separated from the inlet guide vane is extended relatively forwardly.

The tail pipe assembly is also configured to have a relatively greater cross-sectional area in the exit for accommodating an increased volume in the flow stream leading from the common nozzle. The greater cross-sectional area is relative to the turbine exhaust area of an unmodified JT3D family of engines. The tail pipe exit plane is extended, preferably in the range of 15 cm (6") to 18" to allow for mixing of the fan and turbine flows internally.

A bleed air valve of the engine is selectively operational to bleed air from the core engine when the valve is open. A duct is provided for directing bleed air into the mixing area of the common nozzle.

In another form of the invention, there is provided a noise reduction kit for modifying or retrofitting the JT3D family of engines, the kit including at least some of the components to achieve the common nozzle. Also included in the kit is the target-type thrust reverser. The various acoustic elements are provided and the different size cowling, the nose cone and the bleed valve duct are part of the kit.

The invention further includes a method of modifying an engine as defined to reduce noise with the kit. Such an engine would normally include a cascade-type thrust reverser. The method for modifying the engine includes removing components of the engine from the upstream and downstream ends of the core engine.

Thereafter, bypass ducts, some of which may have acoustical liners, are installed for receiving at least a portion of the axial fan air flow from the fans. The ducts terminate at a common nozzle located at the outlet for exhaust gas from the engine through bypass ducts terminating at a common nozzle. The common nozzle has a mixing plane area for each of the fan air flow and for the exhaust gas, preferably in a range between 4516 and 5162 cm² (700 and 800 square inches).

A mixer is installed forward of a tail pipe assembly disposed axially to receive and exhaust the exhaust gas and fan air from the common nozzle. The mixer is installed coaxially downstream to the core engine for radially diverting fan air and permitting radially outward expansion of exhaust gas to mix the fan air and exhaust gas.

An annular exhaust common nozzle is installed coaxially, between the downstream end of the core engine and a thrust reverser. The common nozzle extends the axial flow path of the mixed exhaust gas and fan air upstream of the reverser.

The cascade reverser is replaced with a target-type reverser having opposing doors rotatable into position to block to divert the flow of exhaust gases for generating reverse thrust.

The invention is further described with reference to the accompanying drawings.

### DRAWINGS

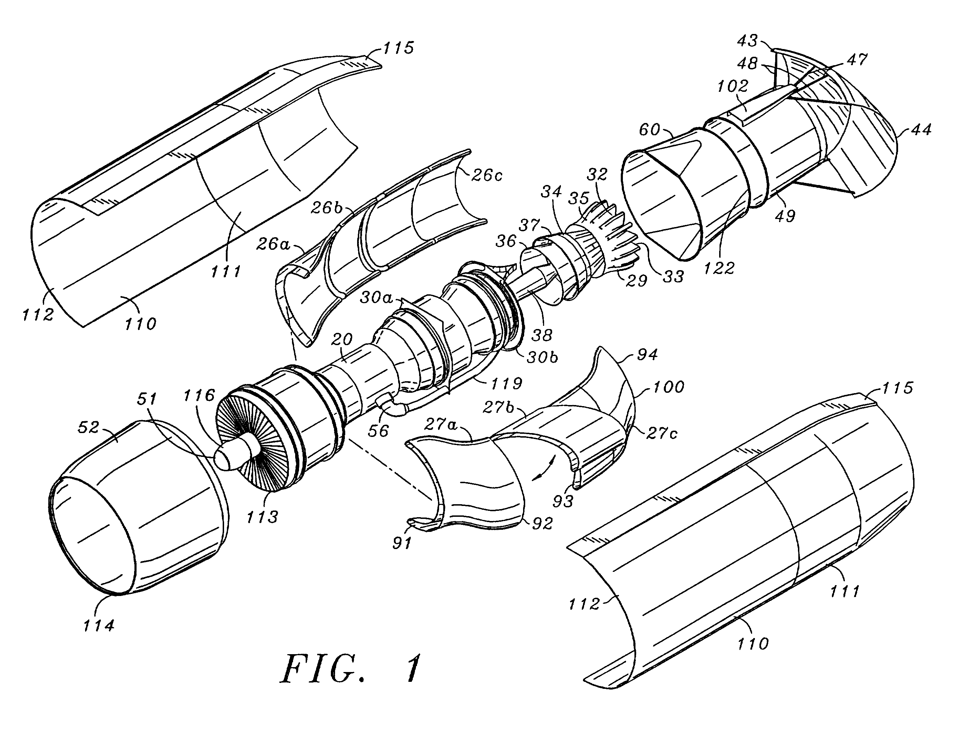

**FIGURE 1** is an exploded perspective top view of the components making up the core engine, and the hush kit.

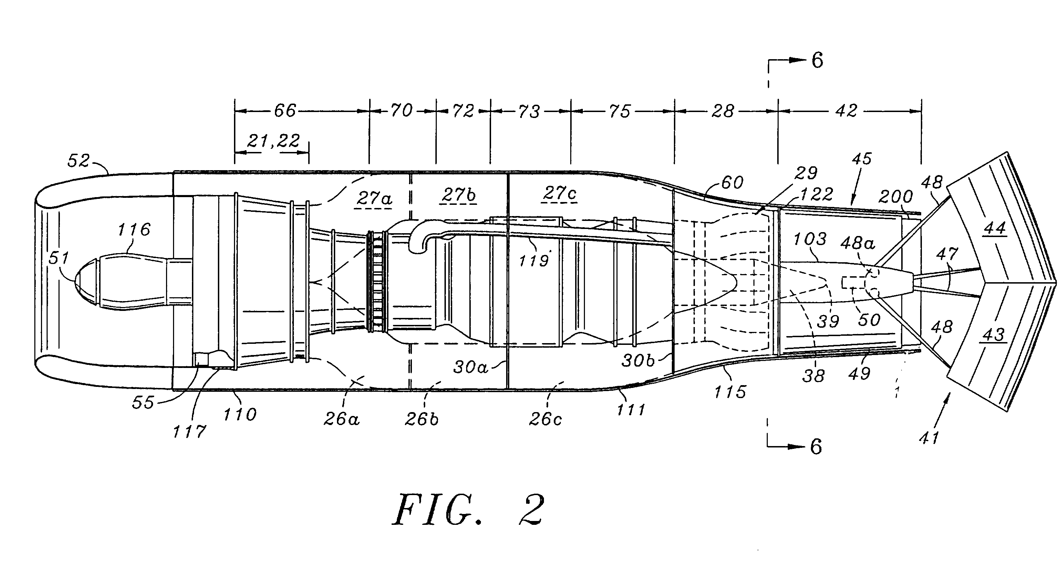

**FIGURE 2** is a bottom view of the core engine, with some hush kit components and the cowling shown in phantom, and the reverser is open.

**FIGURE 3** is a sectional top view of the core engine and sectional views of the duct to the common nozzle area of the mixer, and the reverser is closed, and showing one embodiment where the inlet probe for atmospheric air is in the bullet of the nose piece.

**FIGURE 3A** is a detailed sectional top view of the inlet duct to the fan of the core engine, showing an inlet probe at the inlet for atmospheric air for a valve, and also an ablated space in relation to the fan.

**FIGURE 3B** is a perspective view of the inlet probe for atmospheric air for a valve operating with the core engine.

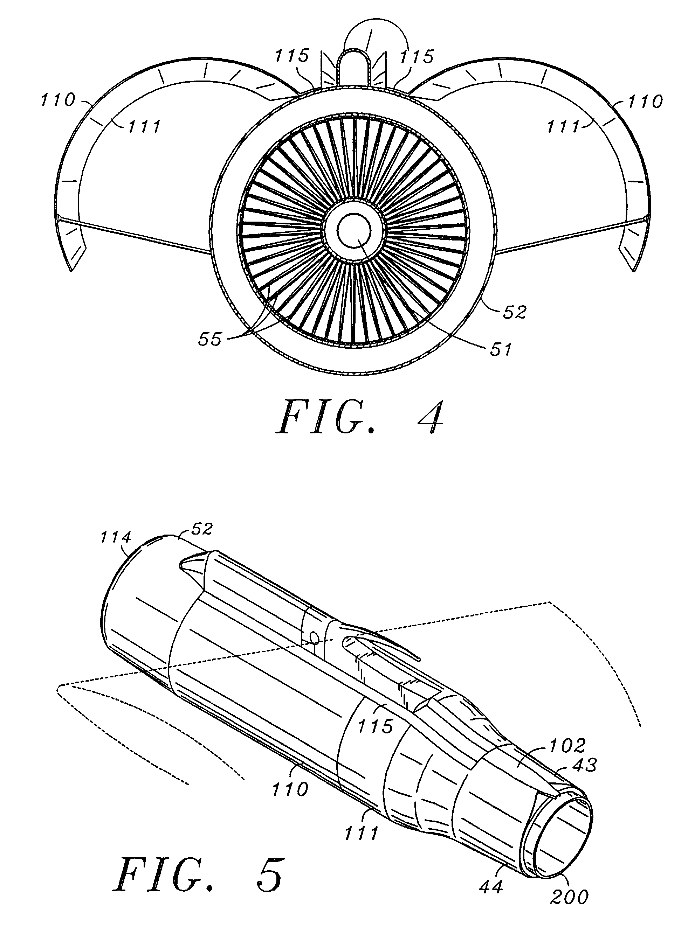

**FIGURE 4** is a cross-sectional front view from the nose showing the engine.

**FIGURE 5** is a partial perspective view from the top showing one of four engines mounted below a partial wing, shown in phantom, on support pylons.

**FIGURE 6** is a rear end view of the engine along lines 6-6 showing the common nozzle area and the rear of the mixer.

**FIGURE 7** is a perspective view, with portions broken away, showing the assembled mixer, contour plate and adapter for forming the common nozzle.

**FIGURE 8** is a flow diagram representing a retrofit construction procedure for applying the hush kit components to a core engine.

**FIGURE 9** is a graphical representation showing the changes in corrected flow (%) in relation to the interacting bypass or duct corrected fan air flow in relation to the core stream or exhaust air flow as a function of engine pressure ratio (EPR) at sea level static conditions.

**FIGURE 10** is a side view of the common nozzle showing the mixer in relation to the target-type thrust reverser.

### DESCRIPTION

A JT3D or TF33 core engine, as modified, is described as set forth below:
I. OVERVIEW
   A. Engine and Hush Kit Generally
   B. General Procedure for Retrofitting Engine
   C. Noise Suppression Hush Kit
II. CORE ENGINE
   A. Description and Operation
      1. General
      2. Operation
      3. Compressor Section
      4. Combustion Section
      5. Turbine And Exhaust
      6. Front Accessory Section
   B. Front Compressor Section
      1. Front Compressor Assembly
      2. No. 1 Bearing Supports and Inlet Case Assembly
      3. Inner Shroud
      4. Outer Shroud
      5. Front Compressor Cases
         a. Front Compressor Case and Vane Assembly
         b. Fan Discharge Case Assembly
         c. Front Compressor Rear Case Assembly
      6. Front Compressor Stator Vanes and Shrouds
      7. Front Compressor Rotor
   C. Compressor Intermediate Section
   D. Rear Compressor Section
      1. Vane and Shroud Assemblies
      2. Air Seals
      3. Rear Compressor Rotor
      4. Diffuser Section
III. AFT CENTER BODY
IV. FAN AIR DUCTS
   A. General
   B. Constant Section and Transition Duct
V. COMMON NOZZLE
VI. MIXER
VII. MIXER ADAPTER RING - SPACER - TRANSITION RING
   A. Mixer Installation in Common Nozzle
VIII. MIXER TRANSITION CONTOUR PLATE (FAIRING) - FAN EXHAUST DUCT SEGMENT
IX. FAN AIR SHROUD
X. THRUST REVERSER
   A. Mounting Ring, Adapter, Spacer - Exhaust Transition Duct Assembly
   B. Target-Type Thrust Reverser
   C. Thrust Reverser: Structural Description
XI. COWLING
   A. General
   B. Nose Cowl
   C. Cowl Doors
   D. Aft Cowl
XII. TAIL PIPE ASSEMBLY
XIII. INLET BULLET: CENTER BODY
XIV. RESPACED INLET GUIDE VANE (RIGV)
XV. COMPRESSOR BLEED
XVI. EXIT NOZZLE ASSEMBLY
XVII. GENERAL

### I. OVERVIEW

### A. Engine and Hush Kit Generally

A noise-reduced turbofan of the JT3D family of engines comprises a core engine **20** having two spool axial flow fans **21** and **22**, multi-stage compressors **23**, **24** and multi-stage reaction turbines (25) and a thrust of at least about 80,064 newtons (18,000 lbs.) at sea level. More specifically, the generated thrust is 80,064 to 93,408 newtons (18,000 to 21,000 lbs.) take-off power at sea level on a standard day. The family of JT3D engines manufactured by Pratt & Whitney consists of the JT3D-3B, the JT3D-7 and the TF33 engine, which includes the P-3/103, the P-5, the P-9 and the P-102/102A engines. The JT3D family of engines is commonly used on Boeing 707, the Boeing KC135 and E3A aircraft, Douglas DC8 series aircraft, and Lockheed C141 aircraft ("Aircraft").

The fans **21** and **22** of the engine are located at an upstream end of the core engine for generating axial fan air flow. There are two bypass ducts **26** and **27** on each side of the engine **20** for receiving at least a portion of the axial fan air flow from the fans **21** and **22**. The ducts **26** and **27** collectively surround the core engine **20** and terminate at a common nozzle **28** located at the outlet for exhaust gas from the engine **20**. Each of the bypass-ducts **26** and **27** is composed of three separable sections **26a**, **26b** and **26c**; and **27a, 27b** and **27c** on each side from the front to the rear of the core engine **20**. The ducts **26** and **27** are removable, in part or whole, as necessary when the core engine **20** needs maintenance. There are two spaced fire walls **30a** and **30b** located transversely of and about the engine **20**.

There is a mixer **29** in the common nozzle **28** which is upstream of a tail pipe assembly generally shown as **42**. The tail pipe assembly **42** includes multiple components to axially receive and exhaust the exhaust gas and fan air from the common nozzle **28** to the exit nozzle **31**.

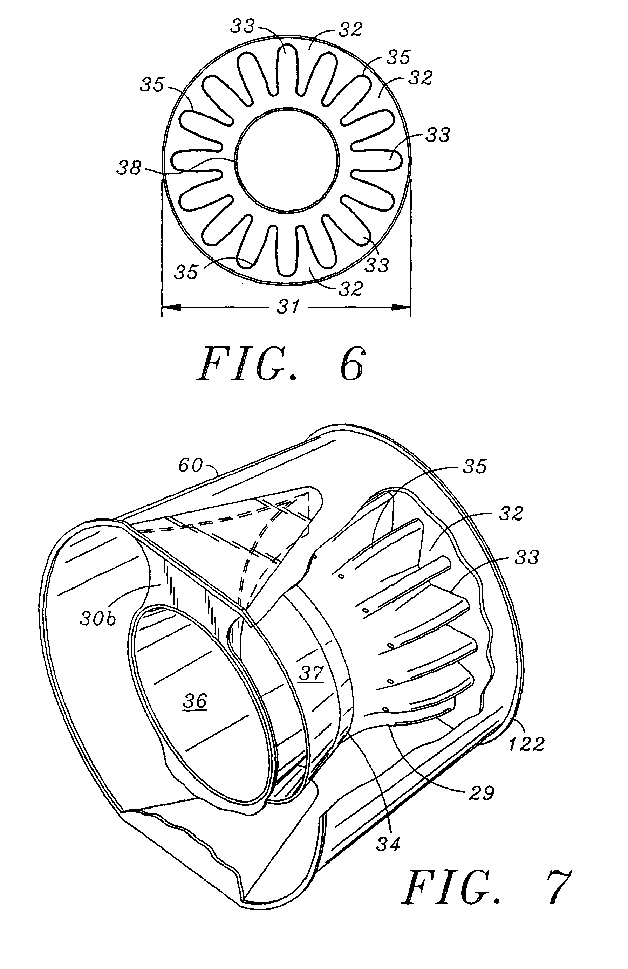

The common nozzle **28** has a mixing plane area for each of the fan air flow and for the exhaust gas. This is shown in **Figure 6**, which represents a view of the mixer from the aft end. Each plane is in a range between 4516 and 5162 cm² (700 and 800 square inches).

The plane area for the fan air **32** is formed effectively by the area of the lobes of the mixer **29** receiving the cold fan air, and is in the range of about 4839 to 5033 cm² (750 to 780 square inches), and is preferably about 4852 cm² (752 square inches). The plane area for the exhaust gas **33** is formed by the lobes of the mixer **29** for receiving the hot gas, and is about 4678 to 4904 cm² (725 to 760 square inches), and preferably about 4691 cm² (727 square inches). The plane area of the common nozzle **28**, as defined by both these plane areas **40**, is 9561 cm² (1,482 square inches). The diameter **31** of the exit nozzle **200** is preferably between about 94 cms to 99 cms (37 inches to 39 inches), and more preferably, 98.75 cms (38.88 inches). The mix of fan air and hot gas is about 80%.

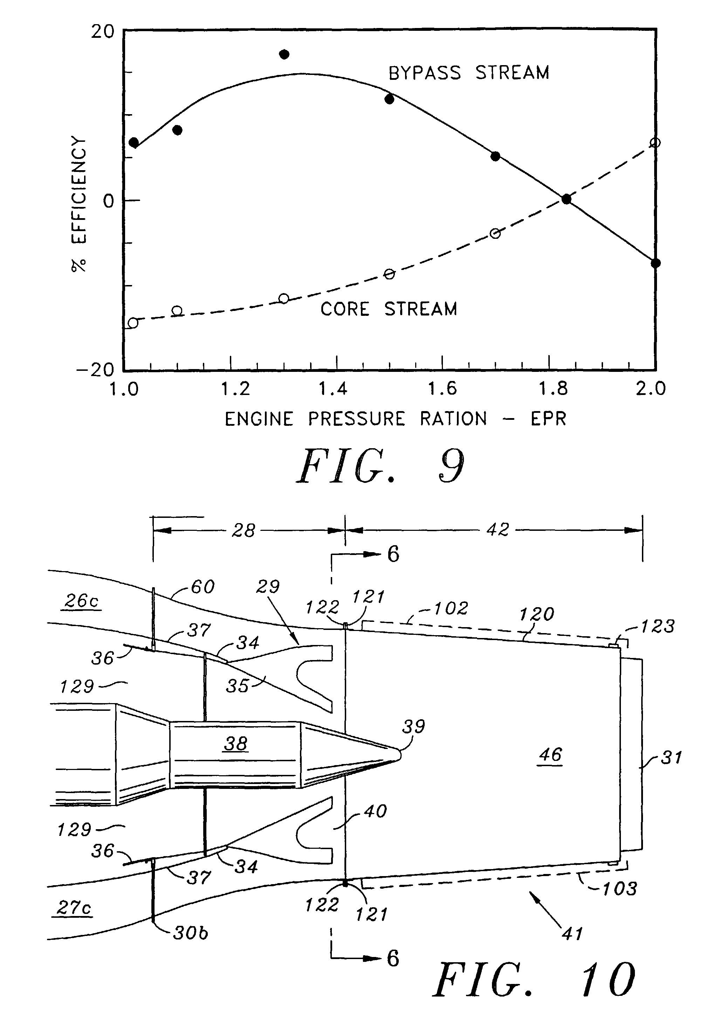

The effect of the common flow accomplished by the common nozzle **28** on the engine operating lines can be assessed by evaluating the relative changes in corrected flow (W√T/P) for the core and bypass streams, as illustrated in Figure 9. A common flow nacelle configuration is selected to maintain the same engine operating point as the separate flow nacelle at static take-off, 1.83 engine pressure ratio ("EPR"). Below take-off power, there is a significant increase in the effective fan nozzle area and a significant decrease in the core nozzle area. The opposite is true above 1.83 EPR. Based on limited influence coefficient information, these area shifts result in a loss in high pressure compressor stability margin at low power and a loss in fan and low pressure compressor stability margin at high power.

The mixer **29** has an annular mixer wall **35** axially extending downstream therefrom. The wall **35** is formed into a plurality of circumferentially alternating radially inward and radially outward lobes **32** and **33**, respectively. The radially inward lobes **32** define cold chutes for radially inwardly diverting fan air. The outwardly directed lobes **33** define hot chutes to permit radially outward expansion of exhaust. The particular JT3D family of engines can have different numbers of lobes in the mixer, preferably having 14 to 18 lobes. The JT3D family of engines preferably has a 16-lobe mixer. A JT8D-200 model engine uses a 12-lobe mixer.

An annular mixer adapter **36** is provided for fixing the mixer to the exhaust outlet **129** for the core engine in a position downstream of, and coaxial with, the core engine **20**.

A mixer transition contour plate is provided **34** for coaxial attachment to the downstream end of the transition contour plate **37** of the core engine **20**. There is an annular, axially extending transition contour plate **37** for attachment to the upstream end of **34**. The plates are shaped to aerodynamically conform to the mixer to direct fan air. This is different to and additional to the mixer adapter **36** which fits within the contour plate **37**.

The rear portion of the core engine **20** includes an aft center body **38**. This is extended to project into the mixer **29** and the end of cone **39** projects beyond the aft end **40** of the mixer **29**.

A target-type thrust reverser **41** is provided to be movable into a first position for converting axial flow of exhaust gas and fan air from the tail pipe assembly **42** into reverse thrust. It is movable into a second stowed position which permits the reverser doors **43** and **44** to act as aerodynamic fairings for the nacelle afterbody **45**.

The target-type thrust reverser system **41** has opposing doors **43** and **44** rotatable into a position to block and divert the flow of exhaust gases from a nozzle assembly **46** of the common nozzle **28** by means of a mechanical driver linkage **47** and roller linkage **48** to an hydraulic actuation system **50**. There is an acoustic liner for nozzle assembly **46** that serves as the exhaust duct section of the engine nacelle package and consists structurally of a welded sandwich barrel tail pipe **49** having the inner face perforated for noise abatement. This barrel tail pipe **49** provides support for the thrust reverser generally indicated as **41**.

A material layer **300** is located in a spacing between a tip **301** of blades **302** for at least some of the fans and a duct for the fans, thereby to reduce a normal clearance between the tip **301** of blades **302** for the fan **21** and the duct. The layer **300** is a plasma spray layer located about the inside wall **303** of the duct, to a thickness of between about 0.127 cm to about 0.229 cm (0.050 to about 0.090 of an inch). This ablation layer reduces the space between the blade tip **301** and the inside wall of the duct and thereby reduces the amount of noise generated by the core engine. The data indicates that this reduction is in the order of about 4 decibels. Different thicknesses, either greater or less, can be used as required.

An acoustically dampened nose cone **51** is provided for coaxial attachment to an upstream end of the core engine **20**. The nose cone **51** is light bulb-shaped.

An inlet cowling **52** has a relatively increased diameter inlet cowling relative to an unmodified engine where blow-in doors are presently used.

The axial flow fan blades **21** and **22** are axially separated by an amount equal approximately to the axial depth **53** of the fan blades **21** and **22**. The inlet guide vane **55** for the front fan **21** is moved forward of its present position, preferably in the range of about 8 cm to 15 cm (3" to about 6"), and preferably about 13 cm (about 5"), and a new engine hub and damped bearing installed. This is termed a "Respaced Inlet Guide Vane" ["RIGV"].

The acoustically dampened light bulb-shaped nose cone is provided for coaxial attachment to an upstream end of the core engine. The acoustically dampened nose cone, also known as an inlet centerbody, is provided for coaxial attachment to an upstream end of the core engine. An inlet cowling, more preferably about 102 cm to 122 cm (about 40" to 48") in length, is provided with a leading edge which is heated by engine bleed air for anti-icing with an acoustic liner comprising the inner air flow walls.

There is an inlet pressure sensing probe housed in an inlet bullet forwardly of the fans. Alternatively, there is an inlet pressure sensing probe housed at a location of an inlet guide vane forwardly of the fans, the probe being shaped for aerodynamic location in the inlet guide vane. The axial flow front fan is axially separated from the inlet guide vane is extended relatively forwardly.

The tail pipe assembly **42** including nozzle **31** is configured to have a greater cross-sectional area in the exit for accommodating an increased volume in the flow stream from the common nozzle **28**.

A bleed air valve from the core engine **20** is selectively operational to bleed air from the core engine **20** when the valve is open. There is a duct **56** for directing bleed air into the common nozzle **28**. The duct **56** for the bleed air runs parallel to and adjacent to one of the ducts **26** or **27** for the fan air. It ends at the common nozzle **28** and particularly through a port provided in the fire wall **30b** adjacent to the area of the common nozzle **28**.

### B. General Procedure For Retrofitting Engine

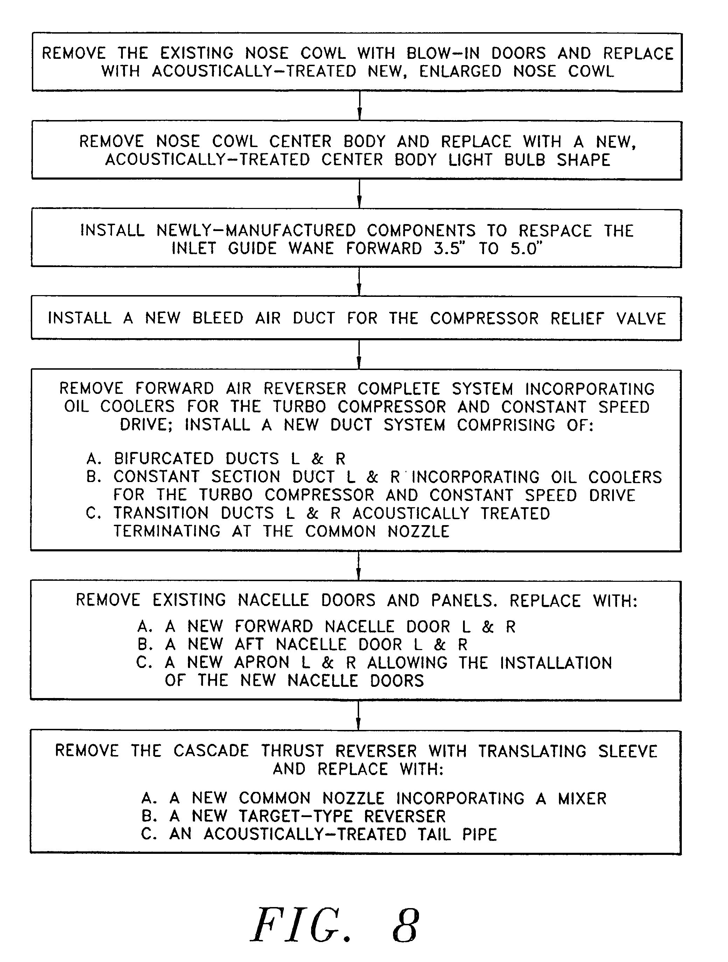

A method of modifying the family of JT3D engines is to reduce noise with the kit includes removing a cascade-type thrust reverser, which is normally part of the JT3D engine installation. It is replaced with a target-type thrust reverser. The method includes removing other components of the engine from the upstream and downstream ends of the core engine. The procedure is described in relation to Figure 8.

Bypass ducts **26** and **27** for receiving the axial fan air flow from the fans are installed. The ducts terminate at a common nozzle **28** located at the outlet for exhaust gas from the engine through bypass ducts **26** and **27** terminating at the common nozzle **28**.

A mixer **29** is installed in a common nozzle assembly to receive and exhaust the exhaust gas and fan air from the common nozzle to the exit nozzle. The mixer **29** provides for radially diverting fan air inwardly and for permitting radially outward expansion of exhaust gas to mix the fan air and exhaust gas. The mixer **29** is installed coaxially downstream to the core engine **20**.

An annular exhaust transition duct, which is formed between a fan air shroud **60**, and contour plates **34** and **37** is installed coaxially in a location relatively between the exit planes of **26C** and **27C** and the tail pipe assembly **42**. The shroud **60** also extends the axial flow path of the mixed exhaust gas and fan air upstream of the reverser **41**.

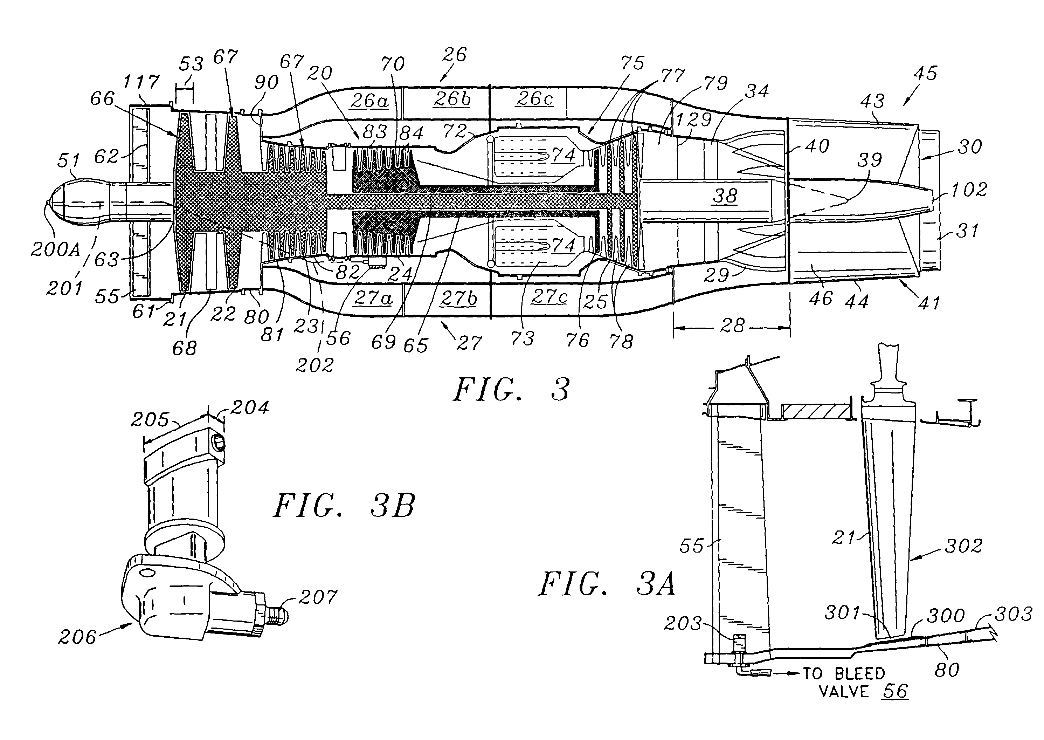

The target-type reverser **41** has opposing doors **43** and **44** rotatable into position to block and divert the flow of exhaust gases for generating reverse thrust, and a stowed position permitting the reverser doors to act as aerodynamic fairings for the nacelle afterbody **45**. Fig 3.

### C. Noise Suppression Hush Kit

The major components for the hush kit for the JT3D family of engines are set forth below.

The elements of the noise suppression kit are sized to fit a two-spool axial flow, turbofan engine with multi-stage compressors and fans driven by multi-stage reaction turbines designed for operation with fixed area nozzles for primary and fan discharge.

The components are:
1. Fan Air Ducts - 3 components on each of two sides of the Core Engine.
2. Common Nozzle - This new component to the JT3D family of engines is for a Nozzle for the primary (exhaust) gas and for the fan air discharge.
3. Mixer to assist the Common Nozzle.
4. Mixer adapter: This is a Spacer or Transition Ring.
5. Mixer Transition Contour Plate. This is a fairing, namely a Fan Exhaust Duct Segment.
6. Bleed Valve Duct terminating into the Common Nozzle.
7. Common Nozzle Duct Assembly for installation of the Thrust Reverser. This has a Thrust Reverser Mounting Ring or Adapter.
8. Target-Type Reverser.
9. Acoustic Nozzle Assemblies.
10. Acoustically treated, lengthened and diametrically enlarged Nose Cowl with no blow in doors for those Aircraft that originally were designed with Nose Cowls having blow-in doors.
11. Acoustically treated, lengthened Center Body: Bullet - light bulb shape
12. Respaced Inlet Guide Vane (RIGV).
13. Cowl doors - Apron.

### II. CORE ENGINE

The core engine or power plant of the JT3D family of engines is a two-spool axial flow turbofan engine with multi-stage compressors and fans driven by multi-stage reaction turbines. The following specifications are applicable to such an engine:
a. 80,064 to 93,408 newtons (18,000 to 21,000 lbs.) take-off static thrust at sea level.
b. Dual axial 15 to 16 stage compressor, 4 stage turbine and 8 annular combustion chambers.
c. Principal dimensions:
   1. Length 345 cm to 363 cm (136" to 143")
   2. Width 134 cm to 139 cm (53" to 55")
   3. Height 142 cm to 152 cm (56" to 60")

### A. Description And Operation

### 1. General

The JT3D family of engines is made up of engines which operate similarly to all turbofan versions of a gas turbine engine. Two front compressor stages **21** and **22**, respectively, have vanes and blades which are considerably larger than other stages and are commonly referred to as a "fan". This "fan" provides two separate air streams.

A primary, or inner air stream travels through the engine **20** and the internal devices operate to generate pressures and gases in the exhaust nozzle **46** and thereby provide propulsive force. This stream is the exhaust stream. Secondary, or outer air stream is mechanically compressed by the "fan" as it enters the engine and is normally ducted to the outside engine **20** a short distance from "fan". This secondary air stream, termed the "fan air", adds to propulsive force similar to a propeller. Although the "fan" has an effect of a geared propeller, it is driven at engine speed. The efficiency of the engine is increased by the dual air streams, and since a smaller percentage of available energy is diverted to the "fan", thrust-specific fuel consumption is lower than that of comparable turboprop engines.

The JT3D family of engines consists of axial flow turbofan engines having a fifteen to sixteen-stage split compressor, an eight-can combustion chamber, and a four-stage split turbine. With all the engine-provided accessory components installed (aircraft component mounting brackets excepted), each of the engines of the JT3D family of engines weighs approximately 1932 Kg to 2223 Kg (4,260 to 4,900 pounds).

### 2. Operation

Air enters the engine **20** through the compressor inlet case assembly. The airframe inlet duct is attached to the front of the inlet case. This inlet case assembly **61** is provided with vane-type multipurpose struts **62** which transmit No. 1 bearing **63** loads to the outer case structure, conduct anti-icing air and lubricating oil to the inner diameter of the engine, and direct air to the front compressor section.

### 3. Compressor Section

The compressor section is of split-type and consists of two rotor assemblies **69** and **65**, respectively. Each rotor assembly **69** and **65** is driven by an independent turbine, and each rotor **69** and **65** is free to rotate at its best speed. Since it is necessary to rotate only one of these units during starting operation, selection of a small rear compressor permits use of a smaller starter.

Air from the inlet guide vane **55** and shroud assembly enters the front compressor **66**, which consists of eight rotor stages **67** and seven stage stator vanes **81**. The gas path of this compressor has a constant inside diameter and decreasing outside diameter. This compressor is the larger of two, and provides initial compression of air. Rotating parts are connected by a drive shaft **69** which passes through the inside of the rear compressor rotor **65** and drive shaft to second and third stage turbines.

Between the front compressor **66** and rear compressor is an intermediate case **70**. It has an automatic arrangement for bleeding front compressor air. This is to improve acceleration characteristics of engine inlet vanes (9th stage) to transmit No. 2 and No. 3 bearing loads to the outer case, conduct supply and return oil to bearings and to the outer case, conduct supply and return oil to the bearings, and direct compressed air from the front compressor **66** to the rear compressor.

The rear compressor has seven rotor stages **84** and six vane stages **83**. It has a constant outside diameter and increasing inside diameter, and is driven by a first stage turbine through an independent shaft concentric with the front compressor drive shaft. Aft of the rear compressor is a diffuser case **72**.

The compressor exit guide vanes at the front of the diffuser case **72** straighten air which is then expanded for entry into combustion chambers **73**. Struts in the case transmit No. 4 and No. 5 bearing loads to the outer portion of the case. In addition, these struts conduct bearing oil pressure and suction lines and provide high pressure air for such engine functions as anti-icing. They also provide a source of clean air for aircraft pressure needs. A water injection manifold is mounted on the front flange. Coolant is dispersed through sixteen curled tubes mounted on the periphery of the diffuser case, through mating holes in the case and injected into the air stream. The outside contours of the compressor and diffuser sections give the engine its "wasp waist" and at the same time provide convenient location for an accessory section.

The fuel manifold, which consists of eight circular clusters of six fuel nozzles, is located in the diffuser case **72** annulus and injects fuel into the air stream in governed proportions. At this point, the air is channeled into eight portions for burning with fuel in eight combustion chambers **73** and **74**.

### 4. Combustion Section

The combustion section consists of eight separate cans arranged annularly, namely the "cannular burners". The chambers **73,** as viewed from the rear of the engine, are numbered in a clockwise direction starting with the uppermost chamber as No. 1. These chambers are connected by cross-over tubes. The compressed air, its velocity decreased and now with fuel particles injected, is lighted initially by spark igniters installed in the No. 4 and No. 5 combustion chambers. After "light-up", the flame is perpetuated by construction of the combustion chamber and heat generated by previous combustion. Exhaust gases pass through the combustion chamber outlet duct.

### 5. Turbine And Exhaust

The turbine nozzle case **75** houses the first three stages of a four-stage turbine and is aft of the combustion section **73**. The first stage **76** drives the rear compressor, and the second, third, and fourth stages **77** drive the front compressor **66**. The turbine nozzle case **75** also contains four turbine exhaust nozzles. The nozzles are made up of a series of stationary vanes **78** which direct exhaust gases through turbine blades and into the turbine exhaust case.

To the rear of the turbine nozzle case **75** there is a turbine exhaust case **79** which houses a fourth stage turbine disk and blades and through which exhaust gases are ejected from the engine. The turbine exhaust case **79** also supports the No. 6 bearing and the No. 6 bearing oil sump.

### 6. Front Accessory Section

The front accessory section consists of one assembly, and front accessory drive support. The case of this assembly is made of magnesium. Sixteen bolts secure the front accessory support to the No. 1 bearing support. The front accessory support has one mount pad on its front face. This pad has provisions for mounting and driving the tachometer.

The No. 1 bearing scavenge pump is mounted on its lower rear face of support. The air and oil for bleed control are brought out of the No. 1, which is externally splined, is inserted, with the "o" ring seal around it, into the front compressor front hub engaging internal spline in hub. It is retained by the same nut that holds the No. 1 bearing inner race in position. The front accessory drive gear meshes with and drives the tachometer drivegear, the No. 1 bearing scavenge pump drive gear.

### B. Front Compressor Section

### 1. Front Compressor Assembly

The front compressor, which is housed in the front compressor front and rear cases, consists of a rotor composed of eight rows of blades **67** and a stator assembly containing eight rows of vane **81** and shroud assemblies located between successive stages of blades. The first two rows of blades **67** are considerably larger than the rest and are referred to as "fan" blades **21** and **22**.

There is no second stage stator and no third row of blades. At this point, the air stream is separated into primary and secondary streams. Separation is achieved by use of a spacer between the second and fourth stage blades. The primary air stream is directed internally by a third stage stator while the secondary air stream is exhausted through exit struts. Numbering of the blade stage from the front to the rear is Nos. 1 and 2 and 4 - 9, and the numbering of the stator stages is Nos. 1 and 3 - 8. The ninth stage stator vanes are incorporated in the intermediate case.

The third stage vane and shroud assembly is of single piece construction, whereas the fourth through eighth stages are of split type. Spacers of the fourth through eighth stages are integral. The inner shrouds from the seal ring for two air seals are on the outer diameter of each rotor.

The compressor is driven by the shaft **69** from the second, third, and fourth stage turbines. Its rotational speed is roughly two-thirds the speed of the rear or high-speed compressor. Its function is to provide initial compression to air that passes through the engine **20** and transmits this air to the rear or high-speed compressor. Stator vanes **68** and rotor blades **67** diminish in size and increase in quantity from the front to the rear of compressor. This matches decreasing volume of air as the pressure of air rises.

The front accessories are driven by a gear attached to the front hub of the front compressor rotor. The rear hub of the front compressor contains the front compressor drive turbine shaft coupling.

The rear hub of the front compressor rotor is supported by a double ball bearing (No.2). The two halves of the No. 2 bearing (front compressor rear) are separated by an oil baffle in which drilled holes direct oil to the forward and aft sections of the double bearing. The No. 3 bearing (rear compressor front) inner race and rollers are mounted on the end of the rear hub. The oil seal on the rear end seals the bearing compartment from the engine air stream.

The front hub, rotor is supported by a roller bearing (No. 1), the liner of which is in the No. 1 bearing housing. The oil seal on the front end seals the bearing compartment from the engine air stream. The bearing support is secured to the inlet case assembly and forms the assembly.

### 2. No. 1 Bearing Supports and Inlet Case Assembly

These assemblies are discussed together. Supports are for the mounting in the inner diameter of the inlet case assembly, vanes of which, carry the structural load of the No. 1 bearing (front compressor front) from the inner shroud to the outer shroud.

The inlet case assembly consists of hollow titanium vanes **55**, incorporating foam rubber stiffeners in center bays, that are inserted between hollow, double-walled titanium inner and outer shrouds. Each vane **55** extends from the inner wall of the inner shroud to the outer wall of the outer shroud. Also, vanes **55** are welded to the outer wall of each shroud. There are holes in the side walls of the vanes **55** that are between the shroud walls, and this forms passage for the flow of anti-icing air. The left and right anti-icing tubes feed heated air, when desired, into the outer rim of the shroud assembly opposite the eight and four o'clock struts.

Some vanes **55** have tubes inside. These are for oil, breather and bleed valve control air lines. The No. 1 bearing oil pressure and oil return tubes are located in the seven o'clock and five o'clock struts, respectively. The purpose of these vanes **55** is to cause air to enter compressor rotor blades **66** at the best angle for best compressor operation and to transport structural load.

### 3. Inner Shroud

The inner shroud, being of double-wall construction, provides for the passage of anti-icing air that has flowed inward through the guide vanes. The oil and air tubes that pass through the vanes **55** have fittings mounted on the inner wall of the inner shroud. On the front edge of the inner shroud, holes are drilled and tapped to hold bolts that secure the No. 1 bearing housing and compressor inlet air seal assembly. The front accessory front support is bolted to its forward face. Anti-icing air outlet holes are also on the front edge of the shrouds. The No. 1 bearing oil seal is bolted at its outer diameter to a compressor inlet vane, inner shroud rear flange.

### 4. Outer Shroud

The outer shroud, being also of double-wall construction, provides for the passage of anti-icing air. The outer wall of the outer shroud forms support for outer fittings of tubes that pass through some vanes **55**. The anti-icing air inlet fitting is also in the shrouded outer wall. The pressure probe fitting passes through both walls of the shroud to protrude into the air stream between the vanes **55**. The front rim of the outer shroud is drilled and tapped to receive bolts which will hold the airframe, air inlet duct. The rear rim of the outer shroud is drilled and tapped to receive bolts that hold the shroud to the front compressor case.

### 5. Front Compressor Cases

There are three front compressor cases, namely: the front compressor case and vane assembly **61**, the fan discharge case assembly **80**, and the compressor rear case assembly **82**. The front compressor case **80, 61** and **82** carry structural load from the engine. These cases **80**, **61** and **82** decrease in diameter from front to rear to match decreasing diameters of stator rings.

### a. Front Compressor Case and Vane Assembly

The front compressor case and vane assembly **80** attaches to the rear flange of the compressor inlet case **61** and front flange of the fan discharge case **81**. In the approximate center of the case, riveted to internal flanges, are titanium first stage stator vanes. At the inner shroud of vanes, an aluminum stage air sealing ring is riveted. The inner shroud is constructed of titanium. From the forward internal flange to the inlet case, the front airflow duct is inserted. From the rearward internal flange to the fan discharge case forward flange, the rear airflow duct is inserted.

### b. Fan Discharge Case Assembly

Attached to the rear flange from the compressor case, and further attached to the van assembly by bolts and pinned to the rear airflow duct, is the fan discharge case **80**. This case is constructed of stainless steel and consists of an outer shroud and an inner case with thirty-eight steel struts between them. The struts are secured in an inner case by a riveted locking plate at the rearward end and wired to a fairing retaining screws at the forward end.

### c. Front Compressor Rear Case Assembly

Attached to the rear innermost flange of the fan discharge case and to the forward flange of the intermediate case is the compressor rear case assembly **82**. Welded to it internally are supports for the vane and shroud assemblies.

### 6. Front Compressor Stator Vanes and Shrouds

The first stage stator vanes **68** were discussed above under the front compressor case and vane assembly. There is no second stage stator. The third and fourth stage rows, or statuaries, are made of aluminum. These vanes **68** are riveted into aluminum shroud rings. The fifth through eighth stator vanes **68** are made of stainless steel and are welded into steel shroud rings. All shroud rings are wide enough to form spacers which permit compressor blades **67** to rotate. Statuaries are pinned to inner shrouds to which are attached riveted inner air seal platforms. The third stage stator vanes and shroud are built into a single circular assembly which is held stationary by a flange inserted between the fan discharge case **81** and the front compressor rear flanges. The fourth through eighth stage stator vanes and shrouds are split and are prevented from rotating by being pinned to each other and to a third stage vane and shroud. When assembled, rings are held in the engine by shoulders on the inside of the front compressor rear case.

The angle at which vanes **68** are mounted in shrouds is set to feed air into the following row of rotor blades **67** to give the best compressor efficiency at operating speed. Stator vanes **68** decrease in size from front to rear to match the decreasing volume air and decreasing size of the rotor blades **67**.

### 7. Front Compressor Rotor

The front compressor rotor **66** consists of two hubs, seven disks, seven spacer assemblies, eight rows of blades **67**, two sets (sixteen each) of tie rods and associated hardware. Each row of blades **66** is inserted into undercut slots in its disk. They are held in place by locks inserted under blades **66** and bent to secure. The blades **66** do not have a tight fit, but rather are seated by centrifugal force during engine operation. The front hub forms the disk for the first row of blades **66**, but the rear hub is a separate unit that is held fast to the rearward face of the seventh stage disk by tiebolts. Spacers between the disks are internally reinforced with tubes. Tiebolts run through these tubes and through disks. These spacers have two knife-edges on the OD. These run against seal platforms on the stator vane inner shroud, which was previously described. An exception to the above is a large spacer between the second and fourth stage compressor blades. This serves as a means of joining the "fan" section to the remainder of the compressor and, in so doing, provides needed space in that area. Each disk has twenty-four holes in its flange. Sixteen are for tierods and eight are for balancing weights, when needed.

The front hub has a lip on its forward face, and the second stage disk has a similar lip on its rearward face to which balance weights can be added when assembly is complete. The smaller set holds the first two stages of blades together, while the longer set holds together the third through eighth stages. Both sections are joined together by a spacer, as previously mentioned. Rotor blades **67** decrease in size from front to rear. The first two stages of blades **66** are considerably larger than the rest and form the fan stages **21** and **22**. The angle of each row of blades **66** is set to give best efficiency at operating speed. The rear hub flange has large holes to allow some ninth stage air into the compressor rotor. This air serves the dual purpose of providing bearing seal pressurizing and cooling. The front compressor rotor consists of hub (No. 1 hub only) disks, and blades **21** and **22**, all of which are made from titanium. The No. 2 hub is made of steel.

### C. Compressor Intermediate Section

Forward mounting points are on an intermediate case **70** which is attached to the rear flange of the front compressor case **82**. A locating pin is used at the top center between the two flanges. An intermediate case **70** surrounds the rear compressor, but is not considered as part of it. It serves to separate low pressure from the compressor from high pressure in the rear compressor and serves a structural function of joining external cases. The intermediate case **70** is of steel construction and has a double wall on the forward end. The guide vanes are welded from the outer wall, through the inner wall and extend into the shroud ring. The front flange of the case is drilled and tapped for bolts that attach it to the front compressor case **82**, and the rear flange is drilled. Nuts are spun into holes for bolting the diffuser case **72** and the intermediate case **70** together.

An oil breather pad is located between the mounting flanges at approximately the two o'clock position. An oil tube fitting is at the six o'clock position between the mounting flanges. Toward the rear of the case **70**, a hole is provided for air bleeding and air bleed valve mounting. On the JT3D-7 and TF33 (DSLG) model engines of the JT3D family of engines, this is located in the upper-left quadrant. On the JT3D-7 and TF33 (BG) model engines of the JT3D family of engines, it is located in the lower-left quadrant.

Thirty vanes on the inside front of the case serve as air inlet guide vanes to the rear compressor. They are hollow steel vanes with openings in their side walls at the outer end. These openings, together with the double wall of the case, form a breather passage from the upper breather connections on the case to the lower opening. Inlet vanes are welded to the No. 3 bearing support whose outer configuration is shaped to form an inner ring for these vanes. At the front (inner) and the rear (outer) ends of this support, bolt circles are provided to receive bolts to hold the diagonal and rear bearing supports. A hollow tubular seal is used at the rear (outer) bolt circle. One of the round plates is flat and forms a diagonal brace between the front and the rear support. The tapered plate has large holes at the top and bottom to allow air breather and passages for oil tubes. Extensions of the front and rear supports form seal housings.

The bearing housing is integral with the center support. The stepped edge seal ring is bolted to support at the outer diameter of the rear support plate. This ring, together with its mating knife-edge seal, minimizes air leakage out of the front end of the rear compressor. The area inside ring and behind rear support plate is exposed to high pressure air extracted from the twelfth stage of compression. The air pressure outside seal ring is from the ninth stage.

### D. Rear Compressor Section

The rear, or high, compressor is driven by a hollow shaft **65** from the front stage of turbine **76**. Its function is to compress further air delivered by the front compressor and then feed this air into the diffuser case **72** and burners **74**.

The rear compressor consists of a stator having six rows of vanes **83** and a rotor shaft **65** having seven rows of blades **84**. Exit guide vanes are mounted in the diffuser section **72**. In function, these are part of the compressor, but because of their structural location, they are discussed under the section regarding the diffuser.

### 1. Vane and Shroud Assemblies

There are six vane and shroud assemblies **83** in the rear compressor. The vanes **83** reduce in height from the front to the rear of the compressor. The outer side diameter of the air passage formed by these assemblies is constant, decreasing size of the vanes **83** is accomplished by increasing the diameter of the inner shroud rings. The vanes **83** are made of steel and are brazed to the inner shroud and pierced through the outer shrouds on the first five vane and shroud assemblies **83**. The spacers separating assemblies are integral. The sixth stage does not provide spacing. However, this is furnished by the seventh stage located in the diffuser case **72**. Between each shroud, dowel pins are used to lock series of shrouds together. The rear shroud (seventh) is pinned to the seventh stage outer shroud to prevent rotation. The edge of each spacer rests against the case shoulder to center the assembly.

### 2. Air Seals

The inside shroud of each row of vanes **83** has a steel ring, with a small step riveted to it on its inside face. Two knife-edge seals on each rotor spacer ride free of steps forming an air seal between the compressor stages.

### 3. Rear Compressor Rotor

The rotor shaft **65** includes seven rows of blades **84** on disks, two hubs, six spacer assemblies, sixteen tie-rod bolts with nuts and washers. A knife-edge seal ring is riveted to lip on the forward face of the tenth stage disk. This seal ring rides free of a platformed seal which was referred to in the compressor intermediate case discussion.

Each row of blades **84** is inserted into undercut slots in its disk. They are held in place by locks inserted under blades **84** and bent to secure. The blades **84** do not have a tight fit, but rather are seated by centrifugal force during engine operation.

Every disk has 32 holes in its flange. Sixteen of the holes are for tie bolts, and the remaining 16 are for balancing weights when needed. The entire assembly is held together by tie bolt heads on one end and a nut and washer on the other end.

The spacers between disks are internally reinforced with tubes. Tie bolts run through tubes and spacer internal flanges, as well as disk flanges.

Neither a front nor rear hub is integral with the disk. The front hub is attached to the front face of a third disk and a rear hub to the rear face of the last disk. The hubs are secured to an assembly for rotor **84** by steel tie bolts, as mentioned above. A steel tube runs from one hub to the other inside rotor.

A tube is force-fit into the inside diameter of both hubs and permits breathing within its inside and keeps twelfth stage pressure air from the No. 3 and No. 4 1/2 bearings.

A third spacer from the front has holes drilled in it. Through these holes, twelfth-stage air is bled into a rotor center where it is bled through holes in the front hub. The air is directed forward to a space just behind No. 3, bearing the rear support plate, and pressurizes the No. 3 bearing oil seal. Since there are no holes in the rear hub disk, the pressure of air against this disk counteracts part of the rotor forward thrust.

The case **70** of the rear compressor carries no structural bearing loads and is thus made of relatively thin sheet metal. Its purpose is to hold stator parts of the compressor and act as the air separator. The air pressure increases from front to rear and finally becomes a sixteenth stage pressure. Between this case **82** and the intermediate case **81** which envelopes it, the pressure is ninth- stage air. The case has a flange at its rear end to which screws that attach the case to the diffuser section **72** are secured. Also, bolt holes are provided to hold the intermediate case **70** to the diffuser section **72**.

### 4. Diffuser Section

The velocity of air as it leaves the rear compressor is very high. This motion is both rearward and tangential around the engine. The exit guide vanes at the forward end of the diffuser case **72** convert tangential whirl into pressure energy. After the vanes, the high pressure air will have a large rearward velocity. The gradual increasing area of air flow passages provided by the case configuration of the diffuser **72** decreases the air flow velocity to suitable burning speed and increases the pressure.

### III. AFT CENTER BODY

At the aft portion of the turbine, there is a center body **38** about which the exhaust gas is expelled. In the modified core engine **20**, the center body **38** is extended rearwardly so that it projects rearwardly beyond the aft direct of the mixer **29**.

### IV. FAN AIR DUCTS

The kit includes a bifurcated series of three ducts **26a, 26b** and **26c;** and **27a, 27b** and **27c,** respectively, on each side of the engine **20**. The acoustically-treated ducts **26** and **27** extend from an engine fan air attachment **90** and terminate at the common nozzle **28**.

### A. General

The engine fan air collector consists of the two duct assemblies **26** and **27** on the side of the engine **20**. Each duct assembly **26** and **27** has three interengaging duct sections **26a, 26b** and **26c;** and **27a, 27b** and **27c,** respectively, on each respective side of the engine **20**. The bi-ducts **26a** and **27a** are constructed of bonded aluminum honeycomb, or composites and are interchangeable, right and left. Each duct assembly **26** and **27** is from front to rear: the forward bifurcated fan air duct **26a** and **27a**, hinged constant section fan air duct **26b** and **27b**, and transition section fan air duct **26c** and **27c**. All ducts can be of bonded aluminum honeycomb or composite material.

### B. Forward Ducts, Constant Section Ducts and Transition Ducts

The collector system consists of the engine fan air ducting **26** and **27** and the engine turbine and exhaust outlet section **129**. During engine operation, the exhausted fan air from ducts **26** and **27** and the engine exhaust gases from outlet **129** join at the rear of the engine **20**, into the common nozzle **28**.
a. The forward bifurcated fan air ducts **26a** and **27a** are installed between the engine fan exit attachments **90** and the hinged constant section fan air ducts **26b** and **27b**. Each bifurcated duct **26a** and **27a** has a semi-circular shape at the forward end **91** to match the shape of the exhaust from fan attachment **90**. The ducts **26a** and **27a** are bolted to the aft face of the fan exit **90** and are contoured at the aft end **92** to fit the side of the engine **20**. The aft end **92** of the ducts **26a** and **27a** are fastened to the hinged constant section fan air ducts **26b** and **27b**, respectively, with bolted channel assemblies, which clamp the ends of the ducts **26a** and **26b** together and **27a** and **27b** together. Splitter webs, preferably in the range of 3 to 6, and more preferably 5, are attached to the inner surface of each duct to direct the flow of air through the ducts **26** and **27** and to provide additional supporting strength.
b. The hinged constant section fan air ducts **26b** and **27b** are installed between the forward bifurcated fan air ducts **26a** and **27a** and the transition section fan air ducts **26c** and **27c**, respectively. The ducts **26b** and **27b** are contoured to fit the side of the engine at the compressor section **70**. The ducts **26b** and **27b** are fastened to the aft end **92** of the forward bifurcated fan air ducts **26a** and **27a** and to the front end **93** of the transition section fan air ducts **26c** and **27c**, respectively, with bolted channel assemblies, two on each side. These channel assemblies are hinged at the top with pins. By removing the two bolts from the upper and lower end of each channel assembly, the ducts can be rotated outward and upward. Splitter webs, preferably in the range of 3 to 6, and more preferably 3, are mounted internally in each duct **26b** and **27b** to direct the flow of air through the duct and to provide additional strength.
c. The transition section fan air ducts **26c** and **27c** are installed between the hinged constant section fan air ducts **26b** and **27b**. The ducts **26c** and **27c** are contoured to fit the side of the engine **20** and are attached at the firewall **30a** by three rods on each side. The ducts **26c** and **27c** are attached at the forward end **93** to the hinged constant section fan air ducts **26b** and **27b** with bolted channel assemblies which clamp the ends of the ducts **26b** and **26c** together, and **27b** and **27c** together. The aft end **94** of the transition section fan air ducts **26c** and **27c** are fastened to the common nozzle shroud **60** by means of bolts. Splitter webs, preferably in the range of 3 to 6, and more preferably 4, are mounted internally in each duct **26c** and **27c** to direct the flow of air through the duct and to provide additional supporting strength.

### V. COMMON NOZZLE

The common nozzle **28** allows the air from the fans **21** and **22** to enter and exit a chamber at the same time as the core exhaust gases from the exhaust outlet **129** from the core engine **20**. It is this chamber which constitutes the common nozzle **28**.

The core gas exhaust outlet **129** and fan gases from duct outlets **26c** and **27c** enter and exit the chamber of the common nozzle **28** at a predetermined nozzle exit size so as not to affect the performance of the engine **20**.

The common nozzle **28** accepts a mixer **29** which allows mixing of gas from the core exhaust **20** and gases from the fans **21** and **22** for maximum benefit.

### VI. MIXER

The mixer means **29** in the common nozzle **28** directs fan air into the core exhaust gas flow path downstream of the core engine **20**. The mixer **29** includes 12 to 18 circumferentially-spaced, axially and radially elongated lobes **33** and **32**, respectively, which define alternating hot and cold chutes. The fan gas (cold) chutes **32** are on the outside where the fan bypass air is located and the turbine exhaust (hot) chutes **33** are aligned with the interior core where the hot core air flows. The mixer **29** is designed to blend fan air passing through fan ducts **26** and **27**, with core exhaust gas emerging from the downstream low pressure turbine of the core engine **20** from exhaust outlet **129**.

The mixing reduces peak temperature of the exhaust stream and therefore reduces jet noise. Since thrust noise is a function of the peak temperature of the exhaust gas stream raised to the eighth power, even slight reductions in the peak overall jet temperature results in significant lowering of the perceived engine thrust noise. The mixer **29** provides the optimum mixing without adversely affecting the engine efficiency.

The mixer **29** has a plurality of alternating hot gas ducts **33** and cold gas ducts **32**. Gas from the bypass ducts **26** and **27** enters into the cold gas ducts **32** which incline radially inward. The colder bypass gas is directed toward the central axis of the engine **20**. Exhaust gas from the core of the engine **20** flows through the hot gas ducts **33** which have a greater cross-section and which incline slightly outward in a radial direction. The hot and cold (primary and fan) gas mix downstream of the mixer **29** with the result that the temperature of the mixed gas is less than that of the core gas from exhaust **129**. This decrease in temperature results in decrease in noise, since the noise is a function of the maximum gas temperature exiting the engine tail pipe **42**.

### VII. MIXER ADAPTER RING - SPACER - TRANSITION RING

### A. Mixer Installation In Common Nozzle

The mixer **29** is installed within the common nozzle **28** by using an adapter ring **36** which is attached to a flange at the end of the engine **20** and extends downstream of the hot and cold gases. This causes laminar flow air to enter the mixing chamber of the mixer **28** at the proper angle and facilitate the objective of mixing by positioning the mixer at a location where fan air is introduced in a full annular flow. The mixing chamber is defined as the area of the lobes **32** and **33** of the mixer **29**. The downstream end of the ring **36** is attached to the mixer **29** and ends at about the position where lobes **32** and **33** begin.

### VIII. MIXER TRANSITION CONTOUR PLATE (FAIRING) - FAN EXHAUST DUCT SEGMENT

The aerodynamic streamlining of the mixer fan stream is achieved with a circular transition contour plate **37**. This transition contour plate **37** is for initially directing the fan air into the cold chutes **32** of the mixer **29**. The plate **37** is attached to another contour plate **34** by the use of mechanical screws. The contour plates **37** and **34** provide laminar flow air through the downstream position to the mixer **29**.

The contour plate **37** and **34** has the same function as a fairing. The plate **34** does not have any of the formed bosses other mixers require, but is a formed smooth annular plate **34** attached to the upstream end of the mixer **29** by mechanical screws.

### IX. FAN AIR SHROUD

A fan air shroud **60** is located at the position downstream from the aft end **94** of the transition ducts **26c** and **27c**. This shroud **60** engages the outside perimeter **100** of the aft end **94** of duct **26c** and **27c** and thereby acts to assist the transition of the fan air from ducts **26** and **27** into the common nozzle **28**. The shroud **60** extends around the mixer **29**, and about the mixer adapter ring and about the contour plate.

The contour plate, or fairing **37** and **34**, provides a smooth air cover for the mixer **29** attack angle thereby providing laminar air flow.

### X. THRUST REVERSER

### A. Mounting Ring, Adapter, Spacer - Exhaust Transition Duct Assembly

The kit comprises an aerodynamic transition ring **122** from the rear outer flange of the fan air shroud **60** of the common nozzle **28** of the engine **20**. The shroud **60** permits proper gas path contours for mixer **29** and engine **20** performance. The thrust reverser ring **121** is mounted together with the ring **122**.

### B. Target-Type Thrust Reverser

The thrust reverser is a four-bar link **47** and **48**, target-type system. Opposing doors **43** and **44** are rotated into position to block and divert the flow of exhaust gases from the primary nozzle **46** (located downstream from the mixer **29**) by means of direct mechanical linkage to a hydraulic actuation system.

Two sets of linkage **47, 48** and **48a** are employed for each thrust reverser door **43** and **44**. Each set **47, 48** and **48a** consists of three types of links: (i) a "driver" link **48** that imparts motion to the door, (ii) an "idler" link **47** that holds the door in alignment, and (iii) an "over-center" link **48a** that connects the driver link **48** to the actuator **50**, and provides the necessary mechanical advantage for deploying or stowing the system.

"Fail-safe" operation of the system is ensured by design incorporation of: (i) dual hydraulic actuators **50**, each pivotally connected via the above-described linkage to opposing edges of the thrust reverser doors **43** and **44**, and (ii) dual stowage latches, either of which is capable of overcoming initial deploy forces until the proper command sequence is given.

### C. Thrust Reverser: Structural Description

The thrust reverser assembly serves two purposes: (i) in the stowed position, the reverser doors act as aerodynamic fairings for the nacelle afterbody **45**, and (ii) in the deployed mode, the doors **43** and **44** divert the flow of gases from the primary nozzle **46** to achieve thrust reversal. The stangs **102** and **103** are located on the top and bottom of the tail pipe assembly **42**.

Movement of the reverser mechanical system is accomplished by a pair of actuators **50** mounted in box stang structures **102** and **103** attached to the trailing portion of the nozzle **46**. The "bird cage" fittings, also mounted from these structures, provide support for the translating carriage guide rods and pivot points for the thrust reverser linkages **47** and **48**. Actuation forces are transmitted by the carriages to the overcenter links **48a**, and then to the driver links **48**.

Applied reverser loads are carried through the nozzle assembly into the common nozzle **28**, and reacted at the engine exhaust flange.

### XI. COWLING

### A. General

1. The forward and aft cowling sections **110** and **111**, attach together around the outer diameter of the engine **20** to form a completely enclosed nacelle **112**. This provides protection for the exterior of the engine **20** and accessories, and provides a smooth, unrestricted airflow around the engine **20** during flight. The cowling consists of the nose cowl **52**, inlet bullet **51**, cowl doors **110**, and aft cowl doors **111**. The thrust reverser **41** completes the nacelle afterbody **45** of the engine **20**.
2. The pylon apron **115** completes the upper portion of the cowling and provides the attach points for the forward cowl doors **110** and the aft cowl door **111**.

### B. Nose Cowl

The nose cowl **52** is the foremost section of the cowling and attaches directly to the engine inlet flange **113**. The leading edge **114** contains a duct which directs engine anti-icing air around the inside of the nose cowl **52**.

The kit incorporates an acoustically-treated, enlarged and extended nose cowl **52** in the range of about 107 cms to 132 cms (about 42" to 52"), and more preferably about 122 cms (about 48"), with a bonded all-metal or composite, fail-safe construction. The nose cowl **52** has an enlarged intake area to accommodate the largest engine of this type. The inlets are acoustically treated by the use of sound-deadening material to the interior surface of the nose cowl **52**. This material is added to attenuate forward-projected turbo-machinery noise and serves to reduce noise during the operation of the engine **20**.

Removable panels in the aft bulkhead of the nose cowl **52** provide access for maintenance on ducts and other components which are installed in the nose cowl **52**.

### C. Cowl Doors

1. The cowl doors **110** cover the major portion of the engine **20** and accessories, providing an unobstructed surface from the nose cowl **52** to the aft cowl **111**. The doors **110** are attached to the pylon apron **115** by hinges equipped with quick-release type pins. Rotary-type tension latches are installed in the doors **110** to retain the doors **110** in the closed position.
2. Integral struts, stowed on the inner surface of the doors **110**, can be released and engaged with engine mounted brackets to support the doors **110** in the open position.
3. The right cowl door inlet duct provides cooling air for the engine compartment.
4. A pressure relief door in each cowl door **110** relieves excess compartment pressure.
5. Limited access doors are provided for servicing when the cowl doors **110** are closed.

### D. Aft Cowl

1. The right and the left sections of the aft cowl **111** complete the faired surface of the nacelle between the forward cowl doors **110** and the thrust reverser **42**. The upper edge of each section is connected to the pylon apron **115** with screws. Both sections of aft cowls **111** join at the bottom edge and are secured with two latch bolts.
2. An access door for the forward latch bolt is located above the latch in the right section.
3. An inlet duct in the right aft cowl 111 provides cooling air for the engine compartment.

### XII. TAIL PIPE ASSEMBLY

The noise suppression kit further includes a modified tail pipe assembly **42** which is configured to have a greater cross sectional area in the exit plane so as to accommodate increased volume in the flow stream caused by introduction of the various components primarily the mixer within the gas flow path. The assembly **42** includes the nozzle assembly **46** in which there is the barrel nozzle **49**, and at its exit end there is the nozzle **31**.

### XIII. INLET BULLET: CENTER BODY

The inlet bullet **51**, having a length in the range of about 91 cms to 102 cms (about 36" to 40"), and more preferably about 97 cms (about 38.35"), when installed on the engine inlet accessory drive case flange, provides smooth airflow into the engine compressor **66** and protects accessories installed on the accessory drive case. The N₁ tachometer generator and the Pₜ₂ inlet pressure sensing probe **200A** are housed in the inlet bullet **51**.

As shown in Fig. 3, suitable plumbing lines **201** transfer the sensed pressure to a bleed valve **202**. This inlet pressure sensing probe Pₜ₂ **200A** is housed in an inlet bullet **51** forwardly of the fans **21**.

Alternatively, as shown in Fig. 3A, there is an inlet pressure sensing probe Pₜ₂ **203** housed at a location of an inlet guide vane **55** forwardly of the fans **21**. The probe **203** is shaped for aerodynamic location in the inlet guide vane **55**. The aerodynamic shape is illustrated in Fig. 3B and includes a width **204** relatively narrower than a length **205** of the probe. The width **204** determined in a direction transverse the air flow, and the length **205** is in a direction longitudinal to the air flow. A suitable mounting adapter **206** affixes the probe **203** in position. The probe **206** has an outlet **207** for connection with the plumbing **201**. The outside surface of the probe 203 in a longitudinal direction is substantially curved in an aerofoil type effect.

The axial flow front fan **21** is axially separated from the inlet guide vane **55** is extended relatively forwardly.

The kit incorporates a newly-designed and lengthened center body acoustically treated with a bonded all-metal, fail-safe construction. The center body is designed for the inlet size and shaped to accommodate inlet flow angles. The center body is light bulb-shaped and acoustically treated by sound-deadening material to the exterior surface **116**. This materials is added to attenuate turbo machinery noise and serves to reduce noise during the operation of the engine.

### XIV. RESPACED INLET GUIDE VANE (RIGV)

The noise reduction kit includes components which respace the engine inlet guide vane **55** several inches forward. This allows more space between the rotating face of fan blade **21** and the fixed inlet guide vane **55**.

This relocation of the fixed guide vane **55** in relation to the rotating fan blade **21** eliminates the siren effect and reduces the noise levels. An acoustically-treated duct **117** is inserted between the forward end of the front compressor **66** and the trailing end of the inlet guide vane **55**.

### XV. COMPRESSOR BLEED

The compressor bleed system **56** relieves the engine bleed pressure when it is not needed. A bleed valve is located in the rear compressor section **70**.

When this valve is in the open position, large quantities of hot compressed air from the compressor **70** are normally exhausted through an opening emitting sound equal to many decibels.

In order to reduce this noise source, the noise reduction kit provides a duct **119** allowing the noise to be attenuated before reaching the atmosphere. The bleed dump valve incorporates a duct **119**, which is attached to the bleed valve opening and extends from the valve and opening and terminates in the common nozzle **28**. This cancels noise input from the bleed valve.

### XVI. EXIT NOZZLE ASSEMBLY

The exit nozzle assembly **46** serves as the exhaust duct section of the engine nacelle package. It consists structurally of a welded sandwich barrel **49**, having the inner face sheet perforated to improve noise abatement.

A forward flange **121** is welded into the barrel for mounting the nozzle assembly **46** to the common nozzle exhaust flange **122**. Also attached to the forward flange **121** is a stiffened sheet aluminum bulkhead which supports the aft nacelle fairing and thrust reverse door latch fittings.

Castings **50** are bolted to the aft segment of the barrel **49** to provide support points for the thrust reverser assembly **42** and stang fairings **102** and **103**.

A closure is utilized at the nozzle trailing edge in the form of a mechanically fastened sheet aluminum zee-ring and cone, incorporating a slip joint for thermal expansion **31**.

### XVII. GENERAL

Many other forms of the invention exist, each differing from others in matters of detail only.

By this invention, the noise from the JT3D engine is considerably reduced by many decibels. The bypass ducts lead fan air to a common nozzle, which provides a first level of noise reduction. Other factors of noise reduction are provided in part by the bleed valve diversion to the common nozzle.

One or more of the noise-reducing features can be omitted. Thus, the noise attenuation features of the cowling and inlet bullet may be omitted in some situations. In some cases, there is a mixer in the common nozzle, whereas, in different cases, the mixer is omitted. In some other cases the RIGV is omitted and the material layer is applied with the relatively normal spacing of the vanes. Similarly the RIGV is optional in the relocation of the pressure inlet Pₜ₂ probe, or the use of an aerodynamically suitable probe.

The invention is generally directed to providing a common nozzle for the JT3D family of engines to thereby reduce noise, while at the same time the engine retains satisfactory operating conditions. This had never previously been achieved or considered possible.

The invention is to be determined solely in terms of the following claims.

## Claims

1. A noise-reduced turbofan engine comprising:
a) a core engine (20) having two spool axial flow fans, multi-stage compressors and multi-stage reaction turbines and a thrust of at least about 80,064 newtons (about 18,000 lbs) at sea level, the fans (21, 22) being at an upstream end (66) of the core engine (20) for generating axial fan air flow; and
b) bypass ducts (26a, 26b, 26c, 27a, 27b, 27c) for receiving at least portion of the axial fan air flow from the fans;
the ducts terminating at a common nozzle (28) located at the outlet for exhaust gas from the engine characterized in that the common nozzle (28) has a mixing plane area (29) for each of the fan air flow and for the exhaust gas in a range between 4516 and 5162 cm² (700 and 800 square inches).

2. An engine as claimed in claim 1, wherein the plane area for the cold air is in the range of about 4839 to 5033 cm² (about 750 to 780 square inches), and preferably about 4852 cm² (about 752 square inches), and the plane area for the hot air is about 4678 to 4904 cm² (about 725 to 760 square inches), and preferably about 4691 cm² (about 727 square inches).

3. An engine as claimed in either of claim 1 or claim 2, including a thrust reverser (41) movable into a first position for converting axial flow of exhaust gas and fan air from a tail pipe assembly (42) into reverse thrust, or into a second stowed position to permit reverser doors (43, 44) to act as an aerodynamic fairing for a nacelle afterbody (45).

4. An engine as claimed in any one of claims 1 to 3, including a mixer (29) in the common nozzle disposed axially to receive and exhaust the exhaust gas and fan air, the mixer having an upstream end and an annualar mixer wall (35) axially extending downstream therefrom the wall being formed into a plurality of circumferentially alternating radially inward and radially outward lobes (32,33) the radially inward lobes (32) defining cold chutes for radially inwardly diverting fan air and outward lobes (33) defining hot chutes for permitting radially outward expansion of exhaust gas.

5. An engine as claimed in any of claims 1 to 4, including an annular mixer adapter (36) fixing the mixer (29) to a casing for the core engine in a position downstream of and coaxial with the core engine (20).

6. An engine as claimed in any of claims 1 to 5, including a mixer transition contour plate (37) having an upstream end coaxially attached to the downstream end of the core engine (20) and an annular, axially extending transition contour plate (34) attached to the upstream end of the mixer (29), the plate being shaped to aerodynamically conform to the mixer to direct fan air.

7. An engine as claimed in any of claims 1 to 6, including an annular transition duct (26c, 27c) axially disposed between the downstream end of the core engine and a thrust reverser (41), the duct extending an axial flow path downstream of the core engine to permit achieving generally smooth laminar flow of mixed exhaust gas and fan air downstream of the mixer (29).

8. An engine as claimed in claim 2, wherein the thrust reverser (41) includes a target-type system having opposing doors (43, 44) rotatable into a position to block and divert the flow of exhaust gases from the common nozzle of the core engine by means of a mechanical linkage (47, 48, 48a) to an hydraulic actuation system (50).

9. An engine as claimed in claim 8, including two sets of linkage for each thrust reverser door (43, 44), each linkage set having:
a) a driver link (48) that imports motion to the door;
b) a link (47) for holding the door in alignment; and
c) a link (48a) for connecting the driver link to an actuator (50), and for providing a mechanical advantage for deploying and stowing the door.

10. An engine as claimed in either claim 8 or claim 9, including an acoustic liner for each interior cone of the thrust reverser (41).

11. An engine as claimed in any one of claims 1 to 10, including a nozzle assembly (46) for serving as an exhaust duct section, the nozzle assembly being structurally a welded sandwich barrel (49) with an inner face sheet perforated to acoustically dampen the tail pipe (42).

12. An engine as claimed in any one of claims 1 to 11, including an acoustically dampened nose cowl (52) coaxially attached to an upstream end of the core engine (20), and preferably having a length of 107 cm to 132 cm (42" to 52").

13. An engine as claimed in claim 12, comprising an inlet bullet or centerhody (51), having a length of about 91 cm to about 102 cm (about 36" to about 40"), being preferably light-bulb shaped.

14. An engine as claimed in any one of claims 1 to 13, including an inlet cowling (52) with a relatively increased diameter intake area (114), and preferably having a length of about 107 cm to 132 cm (about 42" to about 52").

15. An engine as claimed in any one of claims 1 to 14, wherein the axial flow front fan (21) is axially separated by an amount equal approximately to the axial depth of the blades of the fan, the two fans (21, 22) are relatively spaced from each other, and wherein an inlet guide vane (55) for the fans is extended relatively forwardly.

16. An engine as claimed in any one of claims 1 to 15, further including a tail pipe (42) assembly configured to have cross sectional area greater at its exit plane than at its inlet plane for accommodating an increased volume in the flow stream from the common nozzle (28) caused by components including the mixer within the exhaust gas flow path.

17. An engine as claimed in any one of claims 1 to 16, further including a pylon apron (115) for fitting and attaching an upper portion of a cowling for the engine and for providing attachment points for doors (110) of the cowling and for an aft cowling (111).

18. An engine as claimed in any one of claims 1 to 17, including a bleed air valve (202) selectively operational to bleed air from the core engine when the valve is open, and a duct (56) for directing bleed air to the vicinity of the common nozzle (28).

19. An engine as claimed in claim 18, wherein the bleed is directed into the common nozzle (28).

20. An engine as claimed in any one of claims 1 to 19, including a material layer (300) located in a spacing between a tip of blades (302) for at least some of the fans (21) and a duct (305) for the fans, thereby to reduce a normal clearance between the tip of blades for the fan and the duct.

21. An engine as claimed in claim 20, wherein the layer (300) is plasma spray located about the inside wall of the duct (305).

22. An engine as claimed in claim 20 or 21, wherein the layer (300) is located about the inside wall of the duct to a thickness of between about 1.27 mm to about 2.29 mm (about 0.050 to about 0.090 of an inch).

23. An engine as claimed in any one of claims 1 to 22 including an inlet pressure sensing probe (200a) housed in an inlet bullet (51) forwardly of the fans (21, 22).

24. An engine as claimed in any one of claims 1 to 23, including an inlet pressure sensing probe (200a) housed at a location of an inlet guide vane (55) forwardly of the fans, the probe being shaped for aerodynamic location in the inlet guide vane.

25. An engine as claimed in claim 24, wherein the aerodynamic shape includes a width relatively narrower than a length of the probe (200), the width being determined in a direction transverse the air flow and the length in a direction longitudinal to the air flow.

26. A noise reduction kit for modifying a two spool axial flow turbofan engine with multistage compressors and fan driven by multistage reaction turbines, and a thrust of at least about 80,064 newtons (about 18,000 lbs) at sea level, including a fan (21, 22) at an upstream end of a core engine (20) for generating axial fan air flow, a nose cowl coaxially defining an air intake to the fan, and a cascade type thrust reverser, the kit comprising:
a) a common nozzle (28) for providing a first level of noise reduction, adapted for location at the outlet for exhaust gas from the core engine (20) and at the termination of bypass ducts for exhausting fan air; and defining a mixing plane area (29) for each of the fan air flow and for the exhaust gas in a range between 4516 and 5162 cm² (700 and 800 square inches);
b) a mixer (29) having an upstream end and an annular mixer wall axially extending downstream therefrom the wall being formed into a plurality of circumferentially alternating radially inward and radially outward lobes, the radially inward lobes defining cold chutes for radially inwardly diverting fan air and outward lobes defining hot chutes for permitting radially outward expansion of exhaust gas such that the common nozzle has a mixing plane area (29) for each of the fan air flow and for the exhaust gas in a range between 4516 and 5162 cm² (700 and 800 square inches);
c) an annular mixer adapter (36) for fixing the mixer to the engine casing in a position downstream of and coaxial with the core engine;
d) a mixer transition contour plate (37) having an upstream end for coaxial attachment to the downstream end of the core engine and an annular, axially extending transition contour plate (34) for attachment to the upstream end of the mixer, the plate being shaped to aerodynamically conform to the mixer to direct fan air; and
e) an annular transition duct (26c, 27c) for axial disposition between the downstream end of the core engine and a thrust reverser (41), the duct extending an axial from path of mixed exhaust gas and fan air downstream of the mixer.

27. The kit as claimed in claim 26 wherein the thrust reverser (41) includes a four bar target-type system including opposing doors (43, 44) rotatable into position to block and divert the flow of exhaust gases from the common nozzle of the core engine (20) by means of direct mechanical linkage to an hydraulic actuation system.

28. The kit as claimed in claim any one of claims 26 or 27, including two sets of linkage employed for each thrust reverser door (43, 44), each linkage set including
a) a driver link (48) that imports motion to the door;
b) a link (47) for holding the door in alignment; and
c) a link (48a) for connecting the driver link to an actuator (50) and for providing a mechanical advantage for deploying and stowing the door.

29. The kit as claimed in any one of claims 26 to 28, including a nozzle assembly (46) for serving as an exhaust duct section, the nozzle assembly being structurally a welded sandwich barrel (49) with an inner face sheet perforated for acoustically dampen the tail pipe (42).

30. The kit as claimed in any one of claims 26 to 29, including an acoustically dampened nose cowl (52) for coaxial attachment to the upstream end of the core engine (20).

31. The kit as claimed in any one of claims 27 to 30, further including a tail pipe assembly (42) configured to have a relatively grater cross sectional area at its exit plane then at its inlet plane for accommodating an increased volume in the flow stream from the common nozzle (28) caused by introduction of components including the mixer within the exhaust gas flow path.

32. The kit as claimed in any one of claims 27 to 31, including a pylon apron (115) for fitting and attaching an providing attachment points for doors (110) of the cowling and for an aft cowling (111).

33. The kit as claimed in any one of claims 27 to 32, including a duct (56) for directing bleed air to the vicinity of the common nozzle, from a bleed air valve (202) selectively operational to bleed air from the core engine when the valve is open.

34. The kit as claimed in any of claims 27 to 33, comprising six replacement hypass ducts (26a, 26b, 26c, 27a, 27b, 27c) terminating at the common nozzle (28) and mixer (29) in the tail pipe assembly (42) disposed to axially receive and exhaust the exhaust gas and fan air into a thrust reverser for selectively converting axial flow of exhaust gas and fan air into reverse thrust.

35. A kit as claimed in any one of claims 27 to 34, including a material layer (300) located in a spacing between a tip of blades (302) for at least some of the fans (21) and a duct (305) for the fans, thereby to reduce a normal clearance between the tip of blades for the fan and the duct.

36. The kit as claimed in any one of claims 27 to 35, including an inlet pressure sensing probe (200a) housed in an inlet bullet (51) forwardly of the fans.

37. A method of a two spool axial flow turbofan engine with multistage compressors and fan driven by multistage reaction turbines, the engine having a thrust of at least about 80,064 newtons (about 18,000 lbs) at sea level, a fan (21, 22) at the upstream end of the core engine for generating axial fan air flow, a nose cowl (52) coaxially defining and air intake to the fan, and a cascade type thrust reverser, the method comprising the steps of:
a) removing components of the engine from the upstream and downstream ends of the core engine (20);
b) installing bypass ducts (26a, 26b, 26c, 27a, 27b, 27c) for receiving at least portion of the axial fan air flow from the fans, the duct terminating at a common nozzle installed at the outlet for exhaust gas from the engine through bypass ducts terminating at a common nozzle, the common nozzle having a mixing plane area for each of the fan air flow and for the exhaust gas in a range between 4516 and 5162 cm² (700 and 800 square inches);
c) installing an annular exhaust transition duct coaxially, between the downstream end of the core engine at the common nozzle and a thrust reverser, the transition duct extending the axial flow path of the mixed exhaust gas and fan air upstream of the reverser; and
d) replacing the cascade reverser with a target type reverser having opposing doors rotatable into position to block and divert the flow of exhaust gases for generating reverse thrust.

38. A method as claimed in claim 37, wherein the plane area for the cold air is in the range of about 4839 to 5033 cm² (about 750 to 780 square inches), and preferably about 4852 cm² (about 752 square inches), and the plane area for the hot air is about 4678 to 4904 cm² (about 725 to 760 square inches), and preferably about 4691 cm² (about 727 square inches).

39. A method as claimed in either claim 37 or claim 38, including installing a mixer (29) axially to receive and exhaust the exhaust gas and fan air, and further including installing an annular mixer adapter (36) for fixing the mixer (29) to a casing for the core engine (20) in a position downstream of and coaxial with the core engine.

40. A method as claimed in claim 39, including applying a mixer transition contour plate (37) having an upstream end for coaxial attachment to the downstream end of the core engine (20) and an annular, axially extending transition contour plate (34) to the upstream end of the mixer, the plate being shaped to aerodynamically conform to the mixer to direct fan air.

41. A method as claimed in claim 39 or claim 40, including installing an annular transition duct (26c, 27c) for axial disposition between the downstream end of the core engine and a thrust reverser (41), the duct extending an axial flow path downstream of the core engine.

42. A method as claimed in any one of claims 39 to 41, including axially separating the axial flow fan from the inlet guide vane (55) with a spacer equal approximately to the axial depth of the blades.

43. A method as claimed in any one of claims 39 to 42, including replacing an existing tail pipe with a tail pipe assembly (42) configured to have a relatively greater cross sectional area at its exit plane than at its inlet plane, for accommodating an increased volume in the flow stream from the common nozzle (28) caused by the introduction of components including the mixer within the exhaust flow path.

44. A method as claimed in any one of claims 39 to 43, including directing an outlet from a bleed air valve (202) that is selectively operational to bleed air from the core engine when the valve is open, to the vicinity of the common nozzle.

45. A method as claimed in any one of claims 39 to 44, including applying a material layer (300) in a spacing between a tip of blades (302) for at least some of the fans (21) and a duct (305) for the fans, thereby to reduce a normal clearance between the tip of blades for the fan and the duct.

46. A method as claimed in any one of claims 39 to 45, including locating an inlet pressure sensing probe (200a) housed in an inlet bullet (51) forwardly of the fans.

47. A method as claimed in any one of claims 39 to 46, including installing an inlet pressure sensing probe (200a) housed at a location of an inlet guide vane (55) forwardly of the fans, the probe being shaped for aerodynamic location in the inlet guide vane.

## Patentansprüche

1. Geräuschreduziertes Turbinenluftstrahlgebläse-Triebwerk mit
a) einem Kern-Triebwerk (20) mit Zweispulen-Axialventilatoren, Mehrstufen-Kompressoren und Mehrstufen-Reaktionsturbinen und einem Schub von mindestens 80064 Newton (ungefähr 18000 lbs) auf Meereshöhe, wobei sich die Gebläse (21, 22) an einem stromaufwärts gelegenen Ende (66) des Kern-Triebwerks (20) befinden, um einen axialen Gebläse-Luftstrom zu erzeugen, und
b) Bypass-Kanälen (26a, 26b, 26c, 27a, 27b, 27c) zum Aufnehmen zumindest eines Teils des axialen Gebläse-Luftstroms von den Gebläsen,
wobei die Kanäle an einer gemeinsamen Düse (28) enden, die am Ausgang für Abgas von dem Triebwerk angeordnet ist, dadurch gekennzeichnet, dass die gemeinsame Düse (28) sowohl für den Gebläse-Luftstrom als auch für das Abgas einen Mischflächenbereich (29) im Bereich zwischen 4516 und 5162 cm² (700 und 800 Quadratinch) aufweist.

2. Triebwerk nach Anspruch 1, wobei der Flächenbereich für die kalte Luft im Bereich von ungefähr 4839 bis 5033 cm² (ungefähr 750 bis 780 Quadratinch) ist und vorzugsweise ungefähr 4852 cm² (ungefähr 752 Quadratinch), und wobei der Flächenbereich für die heiße Luft ungefähr 4678 bis 4904 cm² (ungefähr 725 bis 760 Quadratinch) ist und vorzugsweise ungefähr 4691 cm² (ungefähr 727 Quadratinch).

3. Triebwerk nach Anspruch 1 oder 2, mit einer Schubumkehrvorrichtung (41), die in eine erste Position bewegbar ist, um die axiale Strömung von Abgas und Gebläseluft von einer Strahlrohranordnung (42) in einen umgekehrten Schub zu konvertieren, oder in eine zweite verstaute Position, um es Umkehrtüren (43, 44) zu ermöglichen, als aerodynamische Verkleidung für ein Rumpf-Achterschiff (45) zu wirken.

4. Triebwerk nach einem der Ansprüche 1 - 3, mit einem Mischer (29) in der gemeinsamen Düse, axial angeordnet, um das Abgas und die Gebläseluft aufzunehmen und auszustossen, wobei der Mischer ein stromaufwärts gelegenes Ende und eine ringförmige Mischerwandung (35) aufweist, die sich hiervon axial stromabwärts erstreckt, wobei die Wandung in eine Vielzahl von Flügeln (32, 33) ausgebildet ist, die sich in Umfangsrichtung radial nach innen und radial nach außen abwechseln, wobei die radial inwärtigen Flügel (32) kalte Rinnen für radial nach innen abgelenkte Gebläseluft und äußere Flügel (33) heiße Rinne definieren, um eine radial nach außen gerichtete Expansion des Abgases zu ermöglichen.

5. Gebläse nach einem der Ansprüche 1 - 4, mit einem ringförmigen Mischer-Adapter (36), der den Mischer (29) an einem Gehäuse für das Kern-Triebwerk in einer Position stromabwärts des Kern-Triebwerks (20) und koaxial hiermit fixiert.

6. Triebwerk nach einem der Ansprüche 1 - 5, mit einer Mischer-Übergangskonturplatte (37), deren stromaufwärts gelegenes Ende koaxial an dem stromabwärts gelegenen Ende des Kern-Triebwerks (20) befestigt ist und mit einer ringförmigen, sich axial erstreckenden Übergangskonturplatte (34), die am stromaufwärts gelegenen Ende des Mischers (29) befestigt ist, wobei die Platte so geformt ist, dass sie dem Mischer aerodynamisch entspricht, um Gebläseluft zu leiten.

7. Triebwerk nach einem der Ansprüche 1 - 6 mit einem ringförmigen Übergangskanal, der zwischen dem stromabwärts gelegenen Ende des Kern-Triebwerks und einer Schubumkehrvorrichtung (41) axial angeordnet ist, wobei der Kanal einen axialen Strömungspfad stromabwärts des Kern-Triebwerks ausbaut, um es zu ermöglichen, eine im wesentlichen glatte laminare Strömung von gemischtem Abgas und Gebläseluft stromabwärts des Mischers (29) zu erreichen.

8. Triebwerk nach Anspruch 2, wobei die Schubumkehrvorrichtung (41) Prallplatten-System umfaßt mit zwei gegenüberliegenden Türen (43, 44), die in eine Position rotierbar sind, um den Strom der Abgase zu blockieren und von der gemeinsamen Düse des Kern-Triebwerks mittels einer mechanischen Kopplung (47, 48, 48a) zu einem hydraulischen Betätigungssystem (50) umzulenken.

9. Triebwerk nach Anspruch 8, mit zwei Sätzen von Kopplungen für jede Schubumkehrtüre (43, 44), wobei jeder Kopplungssatz folgendes umfaßt:
a) ein Antriebsglied (48), das die Türe in Bewegung versetzt,
b) ein Glied (47), um die Türe in Ausrichtung zu halten, und
c) ein Glied (48a), um das Antriebsglied mit einem Aktuator (50) zu verbinden und um einen mechanischen Vorteil zu erzielen beim Öffnen und Verstauen der Türe.

10. Triebwerk nach Anspruch 8 oder 9, mit einer akustischen Einlage für jeden inneren Konus der Schubumkehrvorrichtung (41).

11. Triebwerk nach einem der Ansprüche 1 - 10, mit einer Düsenanordnung (46), die als Abgaskanalabschnitt dient, wobei die Düsenanordnung strukturell eine geschweißte Sandwich-Trommel (49) mit einem perforierten Blech an der Innenseite ist, um das Strahlrohr (42) akustisch zu dämpfen.

12. Triebwerk nach einem der Ansprüche 1 - 11, mit einem akustisch gedämpften Nasenaufsatz (52), der an einem stromaufwärts gelegenen Ende des Kern-Triebwerks (20) koaxial befestigt ist und der vorzugsweise eine Länge von 107 bis 132 cm (42" - 52") aufweist.

13. Triebwerk nach Anspruch 12, mit einer Eingangs-Kugel oder Mittelkörper (51) mit einer Länge von ungefähr 91 bis ungefähr 102 cm (ungefähr 36" bis ungefähr 40"), der vorzugsweise leicht ballonartig geformt ist.

14. Triebwerk nach einem der Ansprüche 1 - 13, mit einem Eingangs-Aufsatz (52) mit einer Einlaßöffnung (114) mit relativ erhöhtem Durchmesser und vorzugsweise mit einer Länge von ungefähr 107 bis 132 cm (ungefähr 42" bis ungefähr 52").

15. Triebwerk nach einem der Ansprüche 1 - 14, wobei das vordere Axialströmungs-Gebläse (21) um einen Betrag axial getrennt ist, der gleich ist in etwa der axialen Tiefe der Gebläse-Flügel, wobei die beiden Gebläse (21, 22) von einander relativ beabstandet sind und wobei sich ein Eingangs-Führungsflügel (55) für die Gebläse relativ nach vorne erstreckt.

16. Triebwerk nach einem der Ansprüche 1 - 15, das weiterhin eine Strahlrohranordnung (42) umfaßt, die so ausgebildet ist, dass sie eine Querschnittsfläche aufweist, die an ihrer Ausgangsebene größer als an ihrer Eingangsebene ist, um im Strömungsstrom von der gemeinsamen Düse (28) ein erhöhtes Volumen unterbringen zu können, das von Teilen einschließlich dem Mischer innerhalb des Abgas-Strömungspfades verursacht wird.

17. Triebwerk nach einem der Ansprüche 1 - 16, das weiterhin eine Pylon-Schürze (115) umfaßt, um einen oberen Abschnitt einer Verkleidung für das Triebwerk anzupassen und zu befestigen und um Befestigungspunkte für die Türen (110) der Verkleidung und für eine Heckverkleidung (111) zu bieten.

18. Triebwerk nach einem der Ansprüche 1 - 17, mit einem Abzapf-Ventil (202), welches selektiv betreibbar ist, um Luft von dem Kern-Triebwerk abzuzapfen, wenn das Ventil offen ist, und mit einem Kanal (56), um Abzapfluft in die Nähe der gemeinsamen Düse (28) zu richten.

19. Triebwerk nach Anspruch 18, wobei die Abzapfung in die gemeinsame Düse (28) gerichtet wird.

20. Triebwerk nach einem der Ansprüche 1 - 19, mit einer Materialschicht (300), die in einem Zwischenraum zwischen einer Flügel-Spitze (302) für zumindest einige der Gebläse (21) und einem Kanal (305) für die Gebläse angeordnet ist, um hierdurch einen normalen Abstand zwischen der Flügel-Spitze für das Gebläse und dem Kanal zu reduzieren.

21. Triebwerk nach Anspruch 20, wobei die Schicht (300) ein Plasmanebel ist, der um die innere Wandung des Kanals (305) angeordnet ist.

22. Triebwerk nach Anspruch 20 oder 21, wobei die Schicht (300) um die innere Wandung des Kanals mit einer Dicke von zwischen ungefähr 1,27 mm bis ungefähr 2,29 mm (ungefähr 0,050 bis ungefähr 0,090 inch) angeordnet ist.

23. Triebwerk nach einem der Ansprüche 1 - 22, mit einem Eingangsdruck-Messfühler (200a), der in einer Eingangskugel (51) vor den Ventilatoren (21, 22) untergebracht ist.

24. Triebwerk nach einem der Ansprüche 1 - 23, mit einem Eingangsdruck-Messfühler (200a), der an einem Ort eines Eingangs-Führungsflügels (55) vor den Gebläsen untergebracht ist, wobei der Fühler zur aerodynamischen Anordnung im Eingangs-Führungsflügel geformt ist.

25. Triebwerk nach Anspruch 24, wobei die aerodynamische Form eine Weite umfaßt, die relativ enger ist als eine Länge des Fühlers (200), wobei die Weite in einer Richtung quer zum Luftstrom und die Länge in einer Richtung längs des Luftstroms bestimmt ist.

26. Eine geräuschreduzierende Ausstattung zum Modifizieren eines Zweispulen-Axialfluß-Turbinengebläse-Triebwerks mit Mehrstufen-Kompressoren und durch Mehrstufen-Reaktionsturbinen betrieben, mit einem Schub von mindestens ungefähr 80064 Newton (ungefähr 18000 lbs) auf Meereshöhe, mit einem Gebläse (21, 22) an einem stromaufwärts gelegenen Ende eines Kern-Triebwerks (20) zum Erzeugen eines axialen Gebläseluftstroms, einer Nasenverkleidung, die einen Lufteintritt in das Gebläse koxial definiert, und einer Schubumkehrvorrichtung des Kaskaden-Typs, wobei die Ausstattung folgendes umfaßt:
a) eine gemeinsame Düse (28), um eine erste Stufe der Geräuschverminderung zu schaffen, die zur Anordnung am Ausgang für Abgas aus dem Kern-Triebwerk (20) und am Ende von Bypass-Kanälen zum Ausstoßen von Gebläseluft angepaßt ist, und die einen Mischflächenbereich (29) sowohl für den Gebläse-Luftstrom als auch für das Abgas im Bereich zwischen 4516 und 5162 cm² (700 und 800 Quadratinch) definiert,
b) einen Mischer (29) mit einem stromaufwärts gelegenen Ende und einer ringförmigen Mischerwandung, die sich hiervon axial stromabwärts erstreckt, wobei die Wandung in eine Vielzahl von umfangsmäßig abwechselnden, sich radial nach innen und radial nach außen erstreckenden Flügeln ausgebildet ist, wobei die sich radial nach innen erstreckenden Flügel kalte Rinnen für sich radial nach innen ablenkende Gebläseluft und die nach außen gerichteten Flügel heiße Rinnen definieren, um eine radial nach außen gerichtete Expansion der Abgase zu erlauben, derart, dass die gemeinsame Düse einen Mischflächenbereich (29) sowohl für den Gebläseluftstrom als auch für das Abgas im Bereich zwischen 4516 und 5162 cm² (700 und 800 Quadratinch) aufweist,
c) einen ringförmigen Mischer-Adapter (36), um den Mischer am Triebwerksgehäuse in einer Position stromabwärts des Kern-Triebwerks und koaxial mit dem Kern-Triebwerk zu fixieren,
d) eine Mischer-Übergangskonturenplatte (37) mit einem stromaufwärts gelegenen Ende zur koaxialen Befestigung am stromabwärts gelegenen Ende des Kern-Triebwerks, und einer ringförmigen, sich axial erstreckenden Übergangskonturenplatte (34) zur Befestigung am stromaufwärts gelegenen Ende des Mischers, wobei die Platte so geformt ist, das sie dem Mischer aerodynamisch entspricht, um Gebläseluft zu lenken, und
e) einen ringförmigen Übergangskanal (26c, 27c) zur axialen Anordnung zwischen dem stromabwärts gelegenen Ende des Kern-Triebwerks und der Schubumkehrvorrichtung (41), wobei der Kanal einen axialen Strömungspfad von gemischtem Abgas und Gebläseluft stromabwärts des Mischers ausdehnt.

27. Ausstattung nach Anspruch 26, wobei die Schubumkehrvorrichtung (41) ein Prallplatten-System mit vier Stangen umfaßt mit gegenüberliegenden Türen (43, 44), die in Positionen rotierbar sind, um die Strömung von Abgas zu blockieren und von der gemeinsamen Düse des Kern-Triebwerks (20) mittels einer direkten mechanischen Verbindung zu einem hydraulischen Betätgungssystem umzulenken.

28. Ausstattung nach einem der Ansprüche 26 oder 27, mit zwei Sätzen von Koppelungen für jede Schubumkehrtüre (43, 44), wobei jeder Kopplungssatz folgendes umfaßt:
a) ein Antriebsglied (48), das die Türe in Bewegung versetzt,
b) ein Glied (47), um die Türe in Ausrichtung zu halten, und
c) ein Glied (48a), um das Antriebsglied mit einem Aktuator (50) zu verbinden und um einen mechanischen Vorteil zu erzielen beim Öffnen und Verstauen der Türe.

29. Ausstattung nach einem der Ansprüche 26 - 28, mit einer Düsenanordnung (46), die als Abgaskanalabschnitt dient, wobei die Düsenanordnung strukturell eine geschweißte Sandwich-Trommel (49) mit einem perforierten Blech an der Innenseite ist, um das Strahlrohr (42) akustisch zu dämpfen.

30. Ausstattung nach einem der Ansprüche 26 - 29, , mit einem akustisch gedämpften Nasenaufsatz (52), der an einem stromaufwärts gelegenen Ende des Kern-Triebwerks (20) koaxial befestigt ist.

31. Ausstattung nach einem der Ansprüche 27 - 30, die weiterhin eine Strahlrohranordnung (42) umfaßt, die so ausgebildet ist, dass sie eine relativ größere Querschnittsfläche aufweist, die an ihrer Ausgangsebene relativ größer als an ihrer Eingangsebene ist, um im Strömungsstrom von der gemeinsamen Düse (28) ein erhöhtes Volumen unterbringen zu können, das von Teilen einschließlich dem Mischer innerhalb des Abgas-Strömungspfades verursacht wird.

32. Ausstattung nach einem der Ansprüche 27 - 31, mit einer Pylon-Schürze (115) zum Anpassen und Befestigen und Vorsehen von Befestigungspunkten für Türen (110) der Verkleidung und für eine Heckverkleidung (111).

33. Ausstattung nach einem der Ansprüche 27 - 32, mit einem Kanal (56) zum Richten von Abzapfluft in die Nachbarschaft der gemeinsamen Düse von einem Abzapfventil (202), das selektiv betreibbar ist, um Luft von dem Kern-Triebwerk abzuzapfen, wenn das Ventil offen ist.

34. Ausstattung nach einem der Ansprüche 27 - 33, die sechs Ersatz-Bypasskanäle (26a 26b, 26c, 27a, 27b, 27c) umfaßt, die an der gemeinsamen Düse (28) enden, und Mischer (29) in der Strahlrohranordnung (42), die so angeordnet sind, dass sie das Abgas und die Gebläseluft axial aufnehmen und in eine Schubumkehrvorrichtung ausstoßen, um den axialen Strom des Abgases und der Gebläseluft selektiv in einen Umkehrschub umzuwandeln.

35. Ausstattung nach einem der Ansprüche 27 - 34, mit einer Materialschicht (300), die in einem Zwischenraum zwischen einer Flügel-Spitze (302) für zumindest einige der Gebläse (21) und einem Kanal (305) für die Gebläse angeordnet ist, um hierdurch einen normalen Abstand zwischen der Flügel-Spitze für das Gebläse und dem Kanal zu reduzieren.

36. Ausstattung nach einem der Ansprüche 27 - 35, mit einem Eingangsdruck-Messfühler (200a), der in einer Eingangskugel (51) vor den Ventilatoren untergebracht ist.

37. Verfahren bei einem Zweispulen-Axialfluß-Turbinengebläse-Triebwerk mit Mehrstufen-Kompressoren und durch Mehrstufen-Reaktionsturbinen gebläsebetrieben, wobei das Triebwerk einen Schub von mindestens ungefähr 80064 Newton (ungefähr 18000 lbs) in Meereshöhe aufweist, wobei ein Gebläse (21, 22) am stromaufwärts gelegenen Ende eines Kern-Triebwerks zum Erzeugen eines axialen Gebläseluftstroms, ein Nasenaufsatz (52), der einen Lufteinlaß zum Gebläse koaxial definiert, sowie eine Schubumkehr-Einrichtung des Kaskadentyps vorgesehen sind und wobei das Verfahren folgende Schritte aufweist:
a) Entfernen von Teilen des Triebwerks von den stromaufwärts und stromabwärts gelegenen Enden des Kern-Triebwerks (20),
b) Installieren von Bypass-Kanälen (26a, 26b, 26c, 27a, 27b, 27c), um zumindest einen Teil der axialen Gebläseluftströmung von den Gebläsen aufzunehmen, wobei der Kanal an einer gemeinsamen Düse endet, die am Ausgang für das Abgas aus dem Triebwerk durch an einer gemeinsamen Düse endenden Bypass-Kanäle endet, wobei die gemeinsame Düse einen Mischflächenbereich sowohl für den Gebläseluftstrom als auch für das Abgas im Bereich zwischen 4516 und 5162 cm² (700 und 800 Quadratinch) aufweist,
c) Installation eines ringförmigen Abgas-Übergangkanals koaxial zwischen dem stromabwärts gelegenen Ende des Kern-Triebwerks an der gemeinsamen Düse und einer Schubumkehrvorrichtung, wobei der Übergangskanal den axialen Strömungsweg des gemischten Abgases und der Gebläseluft stromaufwärts der Umkehrvorrichtung ausdehnt, und
d) Ersetzen der Kaskaden-Umkehrvorrichtung durch eine Prallplatten-Umkehrvorrichtung, die gegenüberliegende Türen aufweist, die in eine Position drehbar sind, um den Strom des Abgases zu blockieren und zur Erzeugung eines Umkehrschubes umzulenken.

38. Verfahren nach Anspruch 37, wobei der Flächenbereich für die kalte Luft im Bereich von ungefähr 4839 bis 5033 cm² (ungefähr 750 bis 780 Quadratinch) ist und vorzugsweise ungefähr 4852 cm² (ungefähr 752 Quadratinch), und wobei der Flächenbereich für die heiße Luft ungefähr 4678 bis 4904 cm² (ungefähr 725 bis 760 Quadratinch) ist und vorzugsweise ungefähr 4691 cm² (ungefähr 727 Quadratinch).

39. Verfahren nach Anspruch 37 oder Anspruch 38, bei dem ein Mischer (29) axial installiert wird, um das Abgas und die Gebläseluft aufzunehmen und auszustossen, wobei weiterhin ein ringförmiger Mischeradapter (36) installiert wird, um den Mischer (39) am Gehäuse für das Kern-Triebwerk (20) in einer Position stromabwärts des Kern-Triebwerks und koaxial hiermit zu fixieren.

40. Verfahren nach Anspruch 39, bei dem eine Mischer-Übergangskonturenplatte (37) angewandt wird, die ein stromaufwärts gelegenes Ende zur koaxialen Befestigung am stromabwärts gelegenen Ende des Kern-Triebwerks (20) aufweist und eine ringförmige, sich axial erstreckende Übergangskonturenplatte (34) am stromaufwärts gelegenen Ende des Mischers, wobei die Platte so geformt ist, das sie dem Mischer aerodynamisch entspricht, um Gebläseluft zu lenken.

41. Verfahren nach Anspruch 39 oder 40, bei dem ein ringförmiger Übergangskanal (26c, 27c) zur axialen Anordnung zwischen dem stromabwärts gelegenen Ende des Kern-Triebwerks und einer Schubumkehrvorrichtung (41) installiert wird, wobei der Kanal die axiale Strömungsbahn stromabwärts des Kern-Triebwerks ausdehnt.

42. Verfahren nach einem der Ansprüche 39 - 41, bei dem das Axialstromgebläse vom Eingangs-Führungsflügel (55) mittels eines Abstandteils axial getrennt wird, das ungefähr gleich der axialen Tiefe der Flügel ist.

43. Verfahren nach einem der Ansprüche 39 - 42, bei dem ein existierendes Strahlrohr durch eine Strahlrohranordnung (42) ersetzt wird, die so ausgebildet ist, dass sie an ihrer Ausgangsebene eine relativ größere Querschnittsfläche als an ihrer Eingangsebene hat, um im Strömungsstrom aus der gemeinsamen Düse (28) ein vergrößertes Volumen unterzubringen, das durch die Einführung von Komponenten einschließlich des Mischers innerhalb der Abgasströmungsbahn verursacht ist.

44. Verfahren nach einem der Ansprüche 39 - 43, bei dem der Ausgang aus einem Abzapfventil (202) in die Nähe der gemeinsamen Düse gerichtet wird, wobei das Abzapftventil selektiv betreibbar ist, um Luft vom Kern-Triebwerk abzuzapfen, wenn das Ventil offen ist.

45. Verfahren nach einem der Ansprüche 39 - 44, bei dem eine Materialschicht (300) in einem Zwischenraum zwischen einer Flügel-Spitze (302) bei zumindest einigen der Gebläse (21) und einem Kanal (305) für die Gebläse angewandt wird, wodurch ein normaler Abstand zwischen den Flügel-Spitzen und des Gebläses und dem Kanal reduziert wird.

46. Verfahren nach einem der Ansprüche 39 - 45, bei dem ein Eingangsdruck-Messfühler (200a), vor den Gebläsen in einer Eingangskugel (51) untergebracht wird.

47. Verfahren nach einem der Ansprüche 39 - 46, bei dem ein Eingangsdruck-Messfühler (200a), der an einem Ort in einem Eingangs-Führungsflügel (55) vor den Gebläsen untergebracht ist, installiert wird, wobei der Fühler zur aerodynamischen Anbringung im Eingangs-Führungsflügel ausgeformt ist.

## Revendications

1. Turboréacteur double flux à bruit atténué comprenant:
a) un moteur central (20) comportant deux soufflantes axiales, des compresseurs axiaux à plusieurs étages et des turbines à réaction axiales à plusieurs étages, montés en double corps, et ayant une poussée d'au moins 80064 newtons environ (18000 lbs environ) au niveau de la mer, les soufflantes (21, 22) se trouvant à une extrémité amont (66) du moteur central (20) pour engendrer un flux axial d'air de soufflante; et
b) des conduits de dérivation (26a, 26b, 26c, 27a, 27b, 27c) destinés à recevoir au moins une partie du flux axial d'air de soufflante provenant des soufflantes;
les conduits aboutissant à une tuyère commune (28) située à la sortie prévue pour le gaz d'éjection du moteur, caractérisé en ce que la tuyère commune (28) a une zone de plan de mélange (29) pour chacun des flux d'air de soufflante et pour le gaz d'éjection, dont l'aire est dans une plage comprise entre 4516 et 5162 cm² (700 et 800 pouces carré).

2. Réacteur selon la revendication 1, dans lequel l'aire de la zone du plan pour l'air froid se situe dans la plage d'environ 4839 à 5033 cm² (environ 750 à 780 pouces carré), et est de préférence d'environ 4852 cm² (environ 752 pouces carré), et l'aire de la zone du plan pour l'air chaud est d'environ 4678 à 4904 cm² (environ 725 à 760 pouces carré), et de préférence d'environ 4691 cm² (environ 727 pouces carré).

3. Réacteur selon la revendication 1 ou la revendication 2, comprenant un inverseur de poussée (41) pouvant être déplacé dans une première position pour convertir le flux axial de gaz d'éjection et d'air de soufflante, provenant d'un ensemble formant tube d'évacuation (42), en une poussée inverse, où dans une seconde position escamotée pour permettre à des panneaux (43, 44) de l'inverseur de jouer le rôle d'un carénage aérodynamique pour une rallonge de nacelle (45).

4. Réacteur selon l'une quelconque des revendications 1 à 3, comprenant un mélangeur (29) dans la tuyère commune positionné axialement pour recevoir et éjecter le gaz d'éjection et l'air de soufflante, le mélangeur ayant une extrémité amont et une paroi annulaire de mélangeur (35) s'étendant axialement vers l'aval depuis cette dernière, la paroi étant conformée en une multiplicité de lobes (32, 33) dirigés radialement vers l'intérieur et radialement vers l'extérieur en alternance dans le sens circonférentiel, les lobes dirigés radialement vers l'intérieur (32) définissant des goulottes froides destinées à faire dévier radialement vers l'intérieur l'air de soufflante et les lobes dirigés vers l'extérieur (33) définissant des goulottes chaudes destinées à permettre une détente en direction radiale vers l'extérieur du gaz d'éjection.

5. Réacteur selon l'une quelconque des revendications 1 à 4, comprenant un adaptateur annulaire de mélangeur (36) assemblant le mélangeur (29) à un carter du moteur central, dans une position en aval du moteur central (20) et coaxiale à ce dernier.

6. Réacteur selon l'une quelconque des revendications 1 à 5, comprenant une tôle de contour de transition de mélangeur (37) ayant une extrémité amont fixée coaxialement à l'extrémité aval du moteur central (20) et une tôle annulaire de contour de transition (34) s'étendant en direction axiale et fixée à l'extrémité amont du mélangeur (29), la tôle étant profilée sous une forme s'adaptant aérodynamiquement à celle du mélangeur pour diriger l'air de soufflante.

7. Réacteur selon l'une quelconque des revendications 1 à 6, comprenant un conduit annulaire de transition (26c, 27c) placé axialement entre l'extrémité aval du moteur central et un inverseur de poussée (41), le conduit prolongeant un trajet d'écoulement axial en aval du moteur central, pour permettre l'établissement d'un écoulement laminaire, régulier dans l'ensemble, de gaz d'éjection et d'air de soufflante mélangés, en aval du mélangeur (29).

8. Réacteur selon la revendication 2, dans lequel l'inverseur de poussée (41) comprend un système du type à déflecteur comportant des panneaux opposés (43, 44) pouvant être amenés, par pivotement, dans une position où ils arrêtent et détournent le flux de gaz d'éjection provenant de la tuyère commune du moteur central, au moyen d'une liaison mécanique articulée (47, 48, 48a) à un système d'actionnement hydraulique (50).

9. Réacteur selon la revendication 8, comprenant deux ensembles de liaison articulée pour chaque panneau (43, 44) de l'inverseur de poussée, chaque ensemble de liaison articulée comportant:
a) une bielle d'entraînement (48) qui imprime un mouvement au panneau;
b) une bielle (47) destinée à maintenir le panneau en alignement; et
c) une bielle (48a) destinée à relier la bielle d'entraînement à un actionneur (50) et à apporter un avantage mécanique pour le déploiement et l'escamotage du panneau.

10. Réacteur selon la revendication 8 ou la revendication 9, comprenant un revêtement insonorisant pour chaque cône intérieur de l'inverseur de poussée (41).

11. Réacteur selon l'une quelconque des revendications 1 à 10, comprenant un ensemble formant tuyère (46) constituant un tronçon du conduit d'éjection, l'ensemble formant tuyère étant structurellement un fût en stratifié soudé (49) ayant, sur sa face interne, une feuille perforée pour réaliser un amortissement acoustique du tube d'évacuation (42).

12. Réacteur selon l'une quelconque des revendications 1 à 11, comprenant un capot avant (52) à amortissement acoustique, fixé à une extrémité amont du moteur central (20), dans une position coaxiale à cette dernière, et ayant, de préférence, une longueur de 107 cm à 132 cm (42" à 52").

13. Réacteur selon la revendication 12, comprenant une pointe d'entrée ou un noyau central (51) ayant une longueur d'environ 91 cm à environ 102 cm (environ 36" à environ 40"), en étant de préférence profilé sous forme d'une ampoule d'éclairage.

14. Réacteur selon l'une quelconque des revendications 1 à 13, comprenant un capot d'entrée (52) avec une zone d'entrée d'air (114) de diamètre relativement agrandi et ayant, de préférence, une longueur d'environ 107 cm à 132 cm (environ 42" à environ 52").

15. Réacteur selon l'une quelconque des revendications 1 à 14, dans lequel la soufflante axiale de devant (21) est maintenue écartée axialement d'une distance approximativement égale à la profondeur, en direction axiale, des pales de la soufflante, et les deux soufflantes (21, 22) sont espacées mutuellement l'une de l'autre, une aube directrice d'admission (55) pour les soufflantes s'étendant en avant de ces dernières.

16. Réacteur selon l'une quelconque des revendications 1 à 15, comprenant, en outre, un ensemble formant tube d'évacuation (42) configuré de manière à présenter, au niveau de son plan de sortie, une section transversale d'aire plus grande qu'au niveau de son plan d'entrée, afin d'accepter un accroissement de volume dans l'écoulement du flux provenant de la tuyère commune (28), induit par des composants incluant le mélangeur dans le trajet du flux de gaz d'éjection.

17. Réacteur selon l'une quelconque des revendications 1 à 16, comprenant en outre un tablier de mât (115) permettant le montage et la fixation d'une partie supérieure d'un capot prévu pour le réacteur et définissant des points de fixation pour des panneaux (110) du capot et pour un capot arrière (111).

18. Réacteur selon l'une quelconque des revendications 1 à 17, comprenant une vanne d'air de soutirage (202) intervenant sélectivement pour soutirer de l'air du moteur central, lorsque la vanne est ouverte, et une canalisation (56) pour diriger l'air de soutirage jusqu'au voisinage de la tuyère commune (28).

19. Réacteur selon la revendication 18, dans lequel le soutirage est dirigé jusqu'à l'intérieur de la tuyère commune (28).

20. Réacteur selon l'une quelconque des revendications 1 à 19, comprenant une couche de matériau (300) située dans un espacement entre une extrémité des pales (302) de certaines au moins des soufflantes (21) et un conduit (305) prévu pour les soufflantes, pour ainsi réduire le jeu qui existe normalement entre l'extrémité des pales de la soufflante et le conduit.

21. Réacteur selon la revendication 20, dans lequel la couche (300) est un dépôt de métallisation au plasma, situé tout autour de la paroi intérieure du conduit (305).

22. Réacteur selon la revendication 20 ou 21, dans lequel la couche (300) est présente tout autour de la paroi intérieure du conduit sur une épaisseur d'environ 1,27 mm à environ 2,29 mm (environ 0,050 à environ 0,090 pouce).

23. Réacteur selon l'une quelconque des revendications 1 à 22, comprenant une sonde de détection de pression d'admission (200a) logée dans une pointe d'entrée (51), en avant des soufflantes (21, 22).

24. Réacteur selon l'une quelconque des revendications 1 à 23, comprenant une sonde de détection de pression d'admission (200a) logée en un emplacement d'une aube directrice d'admission (55) située en avant des soufflantes, la sonde étant dotée d'un profil en assurant un positionnement aérodynamique dans l'aube directrice d'admission.

25. Réacteur selon la revendication 24, dans lequel le profil aérodynamique présente une largeur relativement plus étroite que la longueur de la sonde (200), la largeur étant définie dans une direction transversale au flux d'air et la longueur, dans une direction longitudinale du flux d'air.

26. Ensemble de pièces d'atténuation de bruit pour transformer un turboréacteur double corps et double flux axial ayant des compresseurs à plusieurs étages et des soufflantes, entraînés par des turbines à réaction à plusieurs étages, et une poussée d'au moins 80064 newtons environ (18000 lbs environ) au niveau de la mer, comportant une soufflante (21, 22) à une extrémité amont d'un moteur central (20), destinée à engendrer un flux axial d'air de soufflante, un capot avant définissant coaxialement une entrée d'air pour la soufflante, et un inverseur de poussée du type à grille déviatrice, l'ensemble de pièces comprenant:
a) une tuyère commune (28) destinée à assurer un premier niveau d'atténuation de bruit, qui est conçue pour être placée à la sortie pour le gaz d'éjection du moteur central (20) et à l'extrémité de conduits de dérivation destinés à éjecter l'air de soufflante et qui définit une zone de plan de mélange (29) pour chacun des flux d'air de soufflante et pour le gaz d'éjection, dont l'aire se situe dans une plage comprise entre 4516 et 5162 cm² (700 à 800 pouces carré);
b) un mélangeur (29) ayant une extrémité amont et une paroi annulaire de mélangeur s'étendant axialement vers l'aval depuis cette dernière, la paroi étant conformée en une multiplicité de lobes dirigés radialement vers l'intérieur et radialement vers l'extérieur en alternance dans le sens circonférentiel, les lobes dirigés radialement vers l'intérieur définissant des goulottes froides destinées à faire dévier radialement vers l'intérieur l'air de soufflante et les lobes dirigés vers l'extérieur définissant des goulottes chaudes destinées à permettre une détente en direction radiale vers l'extérieur du gaz d'éjection, de telle sorte que la tuyère commune ait, pour chacun des flux d'air de soufflante et pour le gaz d'éjection, une zone de plan de mélange (29) d'aire située dans une plage comprise entre 4516 et 5162 cm² (700 et 800 pouces carré);
c) un adaptateur annulaire de mélangeur (36) pour assembler le mélangeur au carter du moteur, dans une position en aval du moteur central et coaxiale à ce dernier;
d) une tôle de contour de transition de mélangeur (37) ayant une extrémité amont destinée à être fixée coaxialement à l'extrémité aval du moteur central et une tôle annulaire de contour de transition (34) s'étendant en direction axiale, destinée à être fixée à l'extrémité amont du mélangeur, la tôle étant profilée sous une forme s'adaptant aérodynamiquement à celle du mélangeur pour diriger l'air de soufflante; et
e) un conduit annulaire de transition (26c, 27c) destiné à être disposé axialement entre l'extrémité aval du moteur central et un inverseur de poussée (41), le conduit prolongeant un trajet d'écoulement axial de gaz d'éjection et d'air de soufflante mélangés, en aval du mélangeur.

27. Ensemble de pièces selon la revendication 26, dans lequel l'inverseur de poussée (41) comprend un système du type à déflecteur à quatre barres comportant des panneaux opposés (43, 44) pouvant être amenés, par pivotement, dans une position où ils arrêtent et détournent le flux de gaz d'éjection provenant de la tuyère commune du moteur central (20), au moyen d'une liaison mécanique articulée directe à un système d'actionnement hydraulique.

28. Ensemble de pièces selon la revendication 26 ou 27, comprenant deux ensembles de liaison articulée employés pour chaque panneau (43, 44) de l'inverseur de poussée, chaque ensemble de liaison articulée comprenant:
a) une bielle d'entraînement (48) qui imprime un mouvement au panneau;
b) une bielle (47) destinée à maintenir le panneau en alignement; et
c) une bielle (48a) destinée à relier la bielle d'entraînement à un actionneur (50) et à apporter un avantage mécanique pour le déploiement et l'escamotage du panneau.

29. Ensemble de pièces selon l'une quelconque des revendications 26 à 28, comprenant un ensemble formant tuyère (46) destiné à constituer un tronçon du conduit d'éjection, l'ensemble formant tuyère étant structurellement un fût en stratifié soudé (49) ayant, sur sa face interne, une feuille perforée pour réaliser un amortissement acoustique du tube d'évacuation (42).

30. Ensemble de pièces selon l'une quelconque des revendications 26 à 29, comprenant un capot avant (52) à amortissement acoustique, destiné à être fixé coaxialement à l'extrémité amont du moteur central (20).

31. Ensemble de pièces selon l'une quelconque des revendications 27 à 30, comprenant, en outre, un ensemble formant tube d'évacuation (42) configuré de manière à présenter, au niveau de son plan de sortie, une section transversale d'aire relativement plus grande qu'au niveau de son plan d'entrée, afin d'accepter un accroissement de volume dans l'écoulement du flux provenant de la tuyère commune (28), induit par l'introduction de composants incluant le mélangeur dans le trajet du flux de gaz d'éjection.

32. Ensemble de pièces selon l'une quelconque des revendications 27 à 31, comprenant un tablier de mât (115) pour monter et fixer et définir des points de fixation pour des panneaux (110) du capot et pour un capot arrière (111).

33. Ensemble de pièces selon l'une quelconque des revendications 27 à 32, comprenant une canalisation (56) destinée à diriger de l'air de soutirage jusqu'au voisinage de la tuyère commune, depuis une vanne d'air de soutirage (202) intervenant sélectivement pour soutirer de l'air du moteur central lorsque la vanne est ouverte.

34. Ensemble de pièces selon l'une quelconque des revendications 27 à 33, comprenant six conduits de dérivation de remplacement (26a, 26b, 26c, 27a, 27b, 27c) aboutissant à la tuyère commune (28) et au mélangeur (29), dans l'ensemble formant tube d'évacuation (42) positionné pour recevoir et éjecter axialement le gaz d'éjection et l'air de soufflante dans un inverseur de poussée destiné à convertir sélectivement le flux axial de gaz d'éjection et d'air de soufflante en une poussée inverse.

35. Ensemble de pièces selon l'une quelconque des revendications 27 à 34, comprenant une couche de matériau (300) située dans un espacement entre une extrémité des pales (302) de certaines au moins des soufflantes (21) et un conduit (305) prévu pour les soufflantes, pour ainsi réduire le jeu qui existe normalement entre l'extrémité des pales de la soufflante et le conduit.

36. Ensemble de pièces selon l'une quelconque des revendications 27 à 35, comprenant une sonde de détection de pression d'admission (200a) logée dans une pointe d'entrée (51), en avant des soufflantes.

37. Procédé de transformation d'un turboréacteur double corps et double flux axial comprenant des compresseurs à plusieurs étages et des soufflantes, entraînés par des turbines à réaction à plusieurs étages, le réacteur ayant une poussée d'au moins 80064 newtons environ (18000 lbs environ) au niveau de la mer, et comprenant une soufflante (21, 22) à l'extrémité amont du moteur central destinée à engendrer un flux axial d'air de soufflante, un capot avant (52) définissant coaxialement une entrée d'air pour la soufflante, et un inverseur de poussée du type à grille déviatrice, le procédé comprenant les étapes de:
a) retrait des composants du réacteur des extrémités amont et aval du moteur central (20);
b) mise en place de conduits de dérivation (26a, 26b, 26c, 27a, 27b, 27c) destinés à recevoir au moins une partie du flux axial d'air de soufflante provenant des soufflantes, les conduits aboutissant à une tuyère commune mise en place à la sortie de gaz d'éjection du moteur, par des conduits de dérivation aboutissant à une tuyère commune, la tuyère commune présentant une zone de plan de mélange pour chacun des flux d'air de soufflante et pour le gaz d'éjection, dont l'aire se situe dans une plage comprise entre 4516 et 5162 cm² (700 et 800 pouces carré);
c) mise en place d'un conduit de transition annulaire d'éjection, en position coaxiale, entre l'extrémité aval du moteur central, au niveau de la tuyère commune, et un inverseur de poussée, le conduit de transition prolongeant le trajet d'écoulement axial du gaz d'éjection et de l'air de soufflante mélangés, en amont de l'inverseur; et
d) remplacement de l'inverseur à grille déviatrice par un inverseur du type à déflecteur comportant des panneaux opposés pouvant être amenés, par pivotement, dans une position où ils arrêtent et détournent le flux de gaz d'éjection, pour produire la poussée inverse.

38. Procédé selon la revendication 37, dans lequel l'aire de la zone du plan pour l'air froid se situe dans la plage d'environ 4839 à 5033 cm² (environ 750 à 780 pouces carré), et est de préférence d'environ 4852 cm² (environ 752 pouces carré), et l'aire de la zone du plan pour l'air chaud est d'environ 4678 à 4904 cm² (environ 725 à 760 pouces carré), et de préférence d'environ 4691 cm² (environ 727 pouces carré).

39. Procédé selon la revendication 37 ou la revendication 38, comprenant la mise en place, en direction axiale, d'un mélangeur (29), destiné à recevoir et à éjecter le gaz d'éjection et l'air de soufflante, et comprenant, en outre, la mise en place d'un adaptateur annulaire de mélangeur (36) permettant d'assembler le mélangeur (29) à un carter prévu pour le moteur central (20), dans une position en aval du moteur central et coaxiale à ce dernier.

40. Procédé selon la revendication 39, comprenant la pose d'une tôle de contour de transition de mélangeur (37), ayant une extrémité amont destinée à être fixée coaxialement à l'extrémité aval du moteur central (20) et une tôle annulaire de contour de transition (34) s'étendant en direction axiale et destinée à être fixée à l'extrémité amont du mélangeur (29), la tôle étant profilée sous une forme s'adaptant aérodynamiquement à celle du mélangeur pour diriger l'air de soufflante.

41. Procédé selon la revendication 39 ou la revendication 40, comprenant la mise en place d'un conduit annulaire de transition (26c, 27c) en disposition axiale entre l'extrémité aval du moteur central et un inverseur de poussée (41), le conduit prolongeant un trajet d'écoulement axial en aval du moteur central.

42. Procédé selon l'une quelconque des revendications 39 à 41, comprenant l'écartement, en direction axiale, de la soufflante axiale vis-à-vis de l'aube directrice d'admission (55), à l'aide d'une entretoise d'une longueur approximativement égale à la profondeur, en direction axiale, des pales.

43. Procédé selon l'une quelconque des revendications 39 à 42, comprenant le remplacement d'un tube d'évacuation existant par un ensemble formant tube d'évacuation (42) configuré de manière à présenter, au niveau de son plan de sortie, une section transversale d'aire relativement plus grande qu'au niveau de son plan d'entrée, afin d'accepter un accroissement de volume dans l'écoulement du flux provenant de la tuyère commune (28), induit par l'introduction de composants incluant le mélangeur dans le trajet du flux de gaz d'éjection.

44. Procédé selon l'une quelconque des revendications 39 à 43, comprenant l'étape consistant à diriger une sortie d'une vanne d'air de soutirage (202), qui est sélectivement opérante pour soutirer de l'air du moteur central lorsque la vanne est ouverte, jusqu'au voisinage de la tuyère commune.

45. Procédé selon l'une quelconque des revendications 39 à 44, comprenant la pose d'une couche de matériau (300) dans un espacement entre une extrémité des pales (302) de certaines au moins des soufflantes (21) et un conduit (305) prévu pour les soufflantes, pour ainsi réduire le jeu qui existe normalement entre l'extrémité des pales de la soufflante et le conduit.

46. Procédé selon l'une quelconque des revendications 39 à 45, comprenant le positionnement d'une sonde de détection de pression d'admission (200a) logée dans une pointe d'entrée (51), en avant des soufflantes.

47. Procédé selon l'une quelconque des revendications 39 à 46, comprenant la mise en place d'une sonde de détection de pression d'admission (200a) logée en un emplacement d'une aube directrice d'admission (55) située en avant des soufflantes, la sonde étant dotée d'un profil en assurant un positionnement aérodynamique dans l'aube directrice d'entrée.
